(19) Europäisches Patentamt
European Patent Office
Office européen des brevets

(11) **EP 4 787 118 A1**

(12) **EUROPEAN PATENT APPLICATION**

(43) Date of publication:
**05.08.2026 Bulletin 2026/32**

(51) International Patent Classification (IPC):
**G06F 1/26** (2006.01)   **G06F 1/3212** (2019.01)
**G06F 1/3234** (2019.01)

(21) Application number: **25226595.4**

(22) Date of filing: **22.12.2025**

(52) Cooperative Patent Classification (CPC):
**G06F 1/26; G06F 1/3212; G06F 1/3234**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.01.2025 US 202519042830**

(71) Applicant: **Microsoft Technology Licensing, LLC
Redmond, WA 98052 (US)**

(72) Inventors:
• **KIM, Donghwi
Redmond, 98052 (US)**
• **NIELSEN, Gregory Allen
Redmond, 98052 (US)**
• **DONAHUE, Colin Roman
Redmond, 98052 (US)**

(74) Representative: **CMS Cameron McKenna Nabarro
Olswang LLP
Cannon Place
78 Cannon Street
London EC4N 6AF (GB)**

(54) **ON-DEMAND BATTERY LIFE WITH ADAPTIVE PERFORMANCE CONTROL**

(57) Systems, methods, and computer program products are described herein related to on-demand battery life with adaptive performance control, which achieves a target battery life (e.g., based on user request) by dynamically regulating a battery discharge slope. A power mode is implemented with adaptive power level (PL) limits (e.g., average PL limit and maximum PL limit) to manage battery life over time intervals. The discharge rate of the battery is controlled by dynamically adapting PL limits of the power provided to the computing device to align the remaining battery life with a target battery life. PL limits can be adapted based on a hardcoded mapping of a target performance levels or based on a machine learning model. Computing device performance is adaptively enhanced on demand for usage scenarios by temporary adjustment of PL limits when estimated battery life is within a margin of target battery life.

FIG. 1

**Description**

BACKGROUND

An electric battery (referred to herein as, "battery") is a source of electric power consisting of one or more electrochemical cells with external connections for powering electrical devices. A battery stores electrical charge (electrons), which is drawn from the battery in the form of an electrical current that flows into a powered electrical device for power. Portable computing devices are powered by batteries that provide a limited supply of operating power. Battery life of a battery is at least partially predicted on a battery discharge rate, which is the rate at which electrical current is drawn from the battery. A battery discharge rate is influenced by a power mode. Computing devices often allow users to choose from multiple power modes.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Embodiments described herein enable on-demand battery life with adaptive performance control. An on-demand battery life and adaptive performance manager (ODBLAPM) achieves a target battery life by dynamically regulating a battery discharge slope. An ODBLAPM implements a power mode with adaptive power level (PL) limits to manage a relative state of charge (RSOC) of a battery over time. The ODBLAPM may include a machine learning (ML) model trained to adapt one or more PL limits to align the remaining battery life with a target battery life. Computing device performance is enhanced on demand for usage scenarios by temporary adjustment of PL limits when estimated battery life is within a margin of target battery life. Target performance (e.g., minimum performance level) may be determined by user input or may be learned from user experience. PL limits can be adapted based on, for example, a hardcoded mapping of a target performance levels or based on a machine learning model. As a result of adaptive power and performance management utilizing adaptive PL limits, power consumption can be reduced on millions to billions of devices while improving user experience with adaptive on-demand battery life and adaptive on-demand performance.

In one aspect, a computing device comprises a battery configured to provide power to components of the computing device and an ODBLAPM configured to estimate a remaining battery life of the battery based on a discharge rate of the battery. The ODBLAPM dynamically controls the discharge rate of the battery by dynamically adapting at least one PL limit of the power provided to the computing device to align the remaining battery life with a target battery life. The ODBLAPM increases performance on demand by temporarily increasing the dynamically adapted at least one PL limit in response to a usage scenario for the computing device in response to the estimated remaining battery life being within a margin of the target battery life.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.

FIG. 1 shows a block diagram of an example system for on-demand battery life with adaptive performance control, in accordance with an example embodiment.

FIG. 2 shows a block diagram of a training system configured for network-based training of on-demand battery life with adaptive performance manager (ODBLAPM) models for multiple computing devices, according to an embodiment.

FIG. 3 shows a flow diagram of a model training process for providing on-demand battery life with adaptive performance control, in accordance with an embodiment.

FIG. 4 shows a block diagram of an on-demand battery life with adaptive performance manager (ODBLAPM) utilizing a trained ML model (e.g., ODBLAPM model), according to an embodiment.

FIG. 5 shows an example plot of battery life using an adaptive discharge rate versus battery life without using an adaptive discharge rate, in accordance with an example embodiment.

FIG. 6 shows an example of plot of model training and trained model performance of adaptive on-demand performance boosting during periods of adaptive battery discharge rate control, in accordance with an embodiment. FIGS. 7A and 7B show examples comparing power profiles for a computing device with non-adaptive PL limits (in FIG. 7A) and the computing device adaptive PL limits for on-demand performance boosting during periods of adaptive battery discharge rate control (in FIG. 7B), in accordance with an embodiment.

FIG. 8 shows a flowchart of a process for on-demand battery life with adaptive performance control, according to an embodiment.

FIG. 9 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

DETAILED DESCRIPTION

I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

II. Example Embodiments

An electric battery (referred to herein as, "battery") is a source of electric power consisting of one or more electrochemical cells with external connections for powering electrical devices. A battery stores electrical charge (electrons), which is drawn from the battery in the form of an electrical current that flows into a powered electrical device for power. Portable computing devices are powered by batteries that provide a limited supply of operating power. Battery life of a battery is at least partially predicted on a battery discharge rate, which is the rate at which electrical current is drawn from the battery. A battery discharge rate is influenced by a power mode. Computing devices often allow users to choose from multiple power modes. Power modes differ between prioritizing performance and battery life. The selected power mode significantly impacts both the battery discharge rate and system performance during application use. A "Best Performance" power mode may provide better performance while reducing battery life. A "Recommended" power mode may provide balanced performance with extended battery life. Each power mode is implemented with fixed settings, such as predefined fixed power level caps that limit power consumption. The fixed settings may not vary among computing devices with different builds, missing opportunities on millions to billions of devices to conserve power by reducing power consumption.

For example, the power mode options of a device may provide discrete settings, each with power level caps (e.g., PL1, PL2), representing the maximum package (e.g., system on chip (SoC)) power during operation of a computing device in the selected mode. The modes may include, for example, battery saver mode, recommended mode, better performance mode, and best performing mode (e.g., for gaming). The fixed PL limit/cap settings may not vary among computing devices with different builds, missing opportunities on millions to billions of devices to conserve power by reducing power consumption.

As such, methods, systems, and computer program products are provided for on-demand battery life with adaptive performance control. An on-demand battery life and adaptive performance manager (ODBLAPM) achieves a target battery life by dynamically regulating a battery discharge slope. An ODBLAPM implements a power mode with adaptive power level (PL) limits to manage a relative state of charge (RSOC) of a battery over time. The ODBLAPM may include an ML model trained to adapt one or more PL limits to align the remaining battery life with a target battery life. Computing device performance is enhanced on demand for usage scenarios by temporary adjustment of PL limits when estimated battery life is within a margin of target battery life. Target performance (e.g., minimum performance level) may be determined by user input or may be learned from user experience. PL limits can be adapted based on, for example, a hardcoded mapping of target performance levels or based on a machine learning model. As a result of adaptive power and performance management utilizing adaptive PL limits, power consumption can be reduced on millions to billions of devices while improving user experience with adaptive on-demand battery life and adaptive on-demand performance.

In one aspect, a computing device comprises a battery configured to provide power to components of the computing device and an ODBLAPM configured to estimate a remaining battery life of the battery based on a discharge rate of the battery. The ODBLAPM (e.g., ML model) dynamically controls the discharge rate of the battery by dynamically adapting at least one PL limit of the power provided to the computing device to align the remaining battery life with a target battery life. The ODBLAPM increases performance on demand by temporarily increasing the dynamically adapted at least one PL limit in response to a usage scenario for the computing device when the estimated remaining battery life is within a margin of the target battery life. Dynamic control of discharge rate by adapting one or more PL limits enables real-time reactive performance boosts tailored to component usage, thereby achieving long battery life. Increased power level capability is dynamically activated when necessary, guided by real-time performance parameters that indicate higher power demand. Likewise, decreased power level capability is dynamically activated based on real-time performance parameters that indicate lesser power demand. In this manner, increased battery life is achieved overall. Furthermore, by enabling temporary increases of a PL limit when the estimated remaining battery life is within a margin of the target battery life, but denying such increases otherwise, this keeps battery discharge on track to meet the target battery life (which may be set by the user), and avoids running out of battery power earlier than desired.

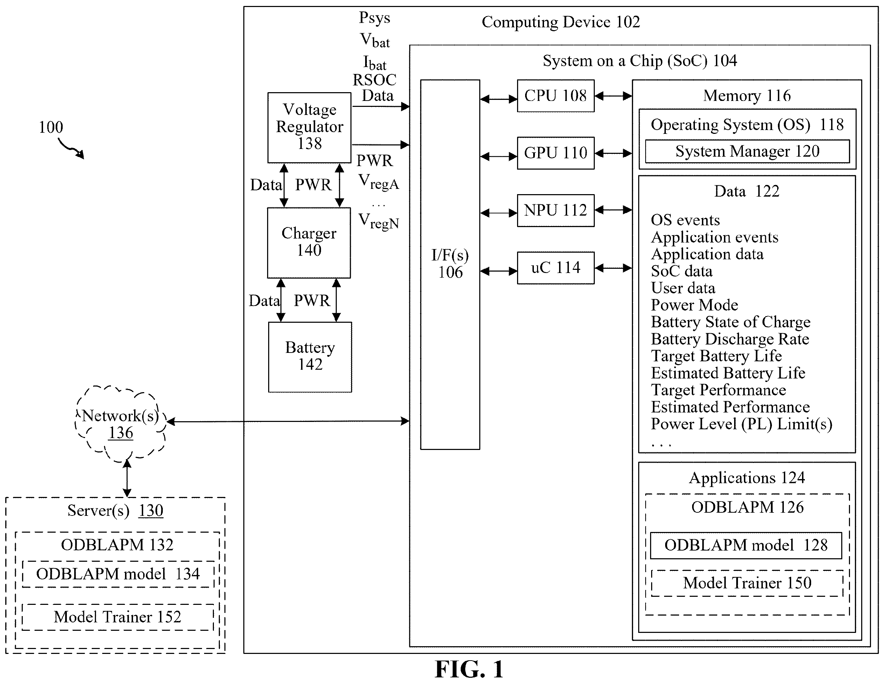

Embodiments may be configured in various ways in various embodiments. For instance, FIG. 1 shows a block diagram of an example system 100 for on-demand battery life with adaptive performance control, in accordance with an example embodiment. As shown in FIG. 1, example system 100 includes a computing device 102 optionally coupled to server(s) 130 via network(s) 136. Computing device 102 includes interface(s) (I/F(s)) 106, a central processing unit (CPU) 108, a graphics processing unit (GPU) 110, a neural processing unit (NPU) 112, a microcontroller (uC) 114, memory 116, battery 142, charger 140, and voltage regulator 138. Memory 116 stores an executable operating system (OS) 118, executable applications 124 (e.g., including executable on-demand battery life and adaptive performance manager (ODBLAPM) 126), and data 122. The components of example system 100 are described in further examples.

Computing environment 100 is any computing environment (e.g., any combination of hardware, software, and firmware), including internal and external coupled devices. For example, computing device 102 may or may not be communicatively coupled to one or more other devices, such as network (NW) device(s) (e.g., server(s) 130) via network(s) 136.

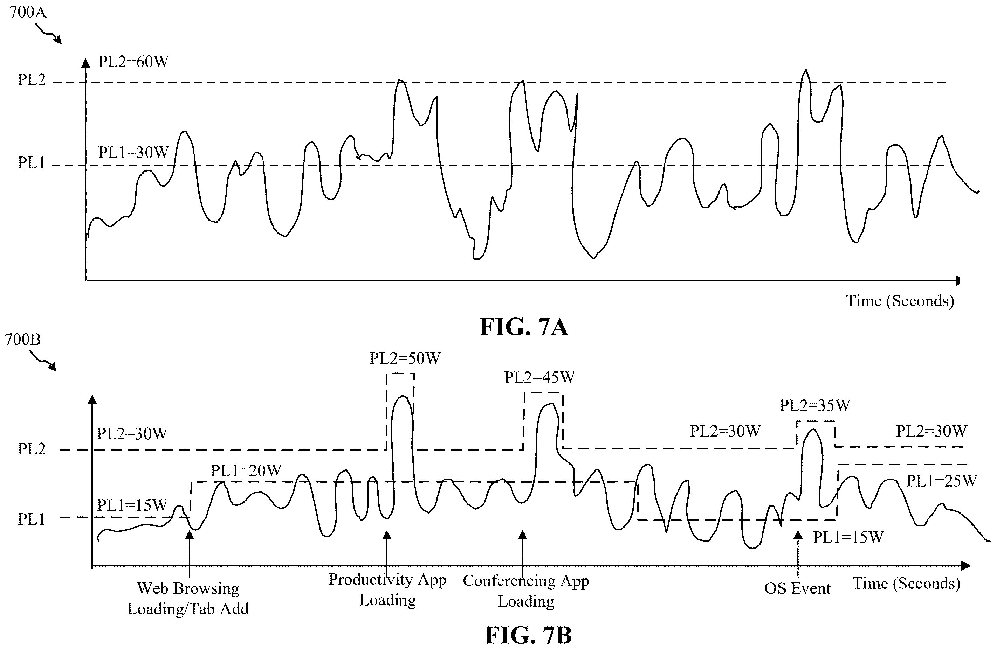

Computing device 102 may be any type of stationary or mobile computing device, including a mobile computer or mobile computing device (e.g., a Microsoft® Surface® device, a personal digital assistant (PDA), a laptop computer, a notebook computer, a tablet computer such as an Apple iPad™, a netbook, etc.), a mobile phone, a wearable computing device, or other type of mobile device, or a stationary computing device such as a desktop computer or PC (personal computer), or a server. Computing device 102 may include one or more applications, operating systems, virtual machines (VMs), storage devices, etc., that may be executed, hosted, and/or stored therein or via one or more other computing devices via network(s) (not shown). Computing device 102 may execute one or more processes in one or more computing environments. A process is any type of executable (e.g., binary, program, application) that is being executed by computing device 102. A process includes, for example, an executed instance of on-demand battery life and adaptive performance manager (ODBLAPM) 126 that determines on-demand battery life and adaptive performance operating parameters for computing device 102. An example computing device 102 with example features is presented in FIG. 7.

Interface(s) (I/F(s)) 106 can include any type of wired or wireless interface (e.g., connectors, logic circuitry, transceivers at various frequencies and protocols) for any purpose (e.g., wireless or wired communication signaling, power, ground) for computing device 102 or component thereof. Interface(s) (I/F(s)) 106 may include, for example, universal serial bus (USB), high definition multimedia interface (HDMI), peripheral component interconnect express (PCIe), inter integrated circuit (I2C), system management (SM) interface, serial peripheral interface (SPI), camera serial interface (CSI), universal asynchronous receiver/transmitter (UART), serial advanced technology attachment (SATA), non-volatile memory express (NVMe), embedded multimedia card (MMC), IEEE 602.11 wireless LAN (WLAN) wireless interface, a Worldwide Interoperability for Microwave Access (Wi-MAX) interface, an Ethernet interface, a cellular network interface, a Bluetooth™ interface, a near field communication (NFC) interface, etc.

Central processing unit (CPU) 108 is a single-core or multi-core processor, and each processor core is single-threaded or multithreaded (e.g., to provide multiple threads of execution concurrently). CPU 108 is configured to execute program code stored in a computer readable medium, such as program code of OS 118 and applications 124 stored in memory 116. The program code is structured to cause CPU 108 to perform operations, including the processes/methods disclosed herein (e.g., on-demand battery life and adaptive performance management). In some examples, CPU 108 may be configured to execute ODBLAPM 126, including utilization of the output of ODBLAPM model 128 executed by NPU 112.

Graphics processing unit (GPU) 110 is configured to render video for display by display unit (e.g., see FIG. 7), for example, to free up CPU 108 to perform other processing, such as ODBLAPM 126. GPU 110 is provided with power output by voltage regulator 138, e.g., at regulated voltage Vreg. Power provided to GPU 110 may be individually controllable, for example, system manager 120.

Neural processing unit (NPU) 112 is a specialized processing unit (e.g., a microprocessor) configured to accelerate performance of machine learning (ML) tasks for applications including neural networks. NPU 112 may, for example, process ODBLAPM model 128 to free up CPU 108 and/or GPU 110 to perform other (e.g., non-ML) computing tasks, such as ODBLAPM 126.

Microcontroller 114 may be configured to implement one or more tasks (e.g., a variety of tasks), such as collection and storage of data 122, implementation of on-demand battery life and adaptive performance management decisions, etc. Microcontroller 114 may or may not be present in various implementations.

Memory 116 stores an executable operating system (OS) 118, executable applications 124 (e.g., including executable on-demand battery life and adaptive performance manager (ODBLAPM) 126), data 122, etc. Memory 116 may include any type of computer-readable media such as, but are not limited to computer-readable storage media. Examples of computer-readable storage media include, but are not limited to, a read only memory (ROM), a random access memory (RAM), a register, cache memory, semiconductor memory devices, flash memory, a solid-state drive (SSD), secure digital (SD) card, magnetic media such as, but not limited to, internal hard disks and removable disks, magneto-optical media, and/or optical media such as compact disc (CD)-ROM disks, and/or digital versatile disks (DVDs). Memory 116 includes space in RAM allocated by OS 118 for programs (e.g., applications 124) executed by. One or more of CPU 108, GPU 110, NPU 112, and microcontroller 114 may read from and write data 122 to memory 116, e.g., during execution of OS 118 and applications 124.

OS 118 controls the allocation and usage of the components of computing device 102 and provides support for one or more applications 124. OS 118 includes system manager 120, which may implement on-demand battery life and adaptive performance management determinations indicated by ODBLAPM 126, such as controlling performance by controlling operating parameters (e.g., power) directly or indirectly to one or more components (e.g., CPU 108, GPU 110, NPU 112, microcontroller 114, display). In some examples, OS 118 provides a user interface for a user to indicate one or more preferences, such as a battery life setting, a performance level setting, a power mode setting, etc. For example, a user may indicate preferences for battery life (e.g., a target battery life) and/or a minimum performance level (e.g., target performance). A user may indicate (e.g., via power mode setting) whether battery life or performance takes precedence.

Applications 124 can include any type of executable programs that may be executed by one or more processors, such as CPU 108, GPU 110, NPU 112, microcontroller 114, etc. Applications 124 can include any categories of executable programs, whether deemed utilities, services, applications, etc. Applications 124 can include, for example, e-mail applications, calendars, contact managers, web browsers, messaging applications, word processing applications, mapping applications, media player applications, productivity suite applications, and ODBLAPM 126, which may include one or more machine learning (ML) models, such as ODBLAPM model 128.

ODBLAPM 126 (e.g., during execution by CPU 108) is configured to adaptively manage power and performance of computing device 102. ODBLAPM 126 is configured to use/consume (e.g., input) data 122 and to generate (e.g., intermediate, output) data 122. In some examples, computing device 102 (e.g., via CPU 108) executes a plugged in not charging (PINC) algorithm (e.g., in system manager 120) that calls ODBLAPM 126 to manage power and performance to achieve battery life and performance targets while battery 142 is discharging without being charged by charger 140. In some examples, ODBLAPM 126 may be implemented in OS 118 (e.g., in system manager 120), for example, instead of as an application 124.

ODBLAPM 126 may perform multiple functions. ODBLAPM 126 analyzes estimated battery life relative to a target battery life and (e.g., also) analyzes estimated performance relative to target performance. ODBLAPM 126 performs an ongoing monitoring and analysis. ODBLAPM 126 analyzes estimated battery life and estimated performance during periods or cycles, re-evaluating based on the most recent data obtained for each period/cycle. In various examples, the length of a period/cycle may be seconds, tens of seconds (e.g., 10, 20, 30, 40, 50 second intervals), minutes (e.g., 1, 2, 3, 4, 5 minute intervals), etc. to determine the discharge rate and recalculate PL limits.

ODBLAPM 126 achieves a target battery life for computing device 102 by dynamically regulating a discharge slope of battery 142. ODBLAPM 126 determines a power mode (e.g., selected by a user) with adaptive power level (PL) limits to manage a relative state of charge (RSOC) and/or a periodic battery RSOC slope (PBRS) of battery 142 over time to achieve the target battery life. ODBLAPM 126 can adaptively determine (e.g., and set/implement) one or more PL limits, e.g., average PL limit (PL1) and/or maximum PL limit (PL2) for one or more power modes to manage battery charge (e.g., indicated by RSOC) and/or battery discharge rate (e.g., indicated by PBRS). For example, a maximum PL may be useful to prevent excessive levels of power consumption over time, while an average PL may allow power consumption spikes over short periods while constraining long term power consumption. PL limits may be adaptively set (e.g., for periods of time) intramodal (e.g., within an adaptive range associated with a power mode) or intermodal (e.g., across adaptive ranges associated with multiple power modes).

While PL1/PL2 may be adjusted (e.g., directly adjusted) as parameters, they may also be influenced/adjusted (e.g., indirectly influenced/adjusted) by one or more variables, such as core frequency and/or core voltage. Achieving higher performance in computing devices may be associated with a higher power level (PL) allocation, which may increase proportionally with the square of the voltage and the frequency, e.g., in accordance with Eq. (1):

$$P = \alpha \cdot C \cdot V^2 \cdot f \qquad\qquad (1)$$

However, higher performance is also associated with higher power consumption. An example of SoC package PL states and allocated voltage and frequency scaling (DVFS) is shown in Table 1.

| Power State | Power Limit | Max Core Frequency (Big Core) | Min Core Frequency (Efficient Core) | P-State | Time Duration | Core Voltage (Estimate) |
|---|---|---|---|---|---|---|
| PL1 | 25W | 3.2 GHz | 2.0 GHz | P2 | Sustained (Indefinite) | ~0.9V - 1.0V |
| PL2 (Moderate) | 65W | 4.8 GHz | 2.5 GHz | P1 | Short term (20-30 sec) | ~1.1V - 1.2V |
| PL2 (Higher) | 95W | 5.3 GHz | 2.8 GHz | P0 | Very short term (10-20 sec) | ~1.25V - 1.35V |

OBLAPM 126 (e.g., also) adaptively enhances the performance of computing device 102 on demand by temporary adjustment of one or more PL limits (e.g., PL2) when an estimated battery life is within a margin or threshold level (e.g., at least 90%) of target battery life and estimated performance (e.g., based on performance metric feedback) is less than a target performance (e.g., indicated by user or learned by ODBLAPM model 128).

ODBLAPM 126 can be configured to estimate actual performance of computing device 102 based on performance metrics provided as feedback, such as processor utilization, operating system events, and application events (e.g., running applications, launch time, input delay, application load time, export to pdf, cut and paste operation, email loading, application of image effects, Webpage loading time, etc.). ODBLAPM 126 can start an adaptive PL limit (e.g., maximum PL limit) at a low-power limit and adaptively increase the adaptive PL limit to a higher limit (e.g., an optimized limit) based on an analysis of performance metrics. Target performance (e.g., minimum performance level) may be determined by user input or may be learned (e.g., by ODBLAPM model 128) from user experience. PL limits can be adapted based on, for example, a hardcoded mapping of a target performance levels or based on a machine learning model (e.g., ODBLAPM model 128). As a result of adaptive power and performance management utilizing adaptive PL limits, power consumption can be reduced on millions to billions of devices while improving user experience with adaptive on-demand battery life and adaptive on-demand performance.

ODBLAPM 126 is configured to estimate a remaining battery life of battery 142, for example, based on a discharge rate of the battery 142. ODBLAPM 126 can be configured to monitor the average discharge rate of battery 142. ODBLAPM 126 manages average discharge power of battery 142, for example, over periods of RSOC changes during a time series. ODBLAPM 142 dynamically controls the discharge rate of battery 142 by dynamically adapting a PL limit of computing device 102 to align the remaining battery life with a target battery life. ODBLAPM 126 receives performance feedback (e.g., stored as data 122) comprising performance parameters indicating performance of computing device 102 based on the dynamically adapted PL limit. ODBLAPM 126 estimates performance of computing device 102 based on the performance parameters. ODBLAPM 126 increases performance of computing device 102 on demand by temporarily increasing the dynamically adapted PL limit if/when the estimated performance is less than a target performance and if/when the estimated remaining battery life is within a margin of the target battery life.

ODBLAPM 126 can enlist one or more components of computing device 102 to carry out or execute determinations, such as adapting PL limits (e.g., for target battery life and/or target performance) to determined PL limits. For example, ODBLAPM 126 can indicate to system manager 120 respective operating parameters for CPU 108, GPU 110, NPU 112, microcontroller 114, etc. to effectuate adaptive PL limits. In some examples, SoC 104 receives PL limit(s) determined by ODBLAMP 126 and uses the PL limit(s) to adjust one or more settings (e.g., PL1 and PL2_Adaptive configurations) to meet target on-demand active battery life and target performance (e.g., if battery life allows it).

ODBLAPM 126 may utilize machine learning (ML), such as an artificial intelligence (AI) model. For example, ODBLAPM model 128 (e.g., during execution by NPU 112) can be configured to make one or more determinations for ODBLAPM 126. In some examples, ODBLAPM model 134 is configured to determine one or more adaptive power level (PL) limits (e.g., PL2) based on performance feedback parameters, which may be obtained (e.g., periodically) by OS 118 and stored as data 122 for access as input to ODBPLAPM model 128. Utilization of performance feedback allows adaptations across many types of computing devices with different builds, e.g., components. Utilization of machine learning (e.g., artificial intelligence (AI)) allows computing devices to self-learn and self-tune for (e.g., optimal) operation to find PL levels (e.g., PL2 level) to get desired battery life and performance. The AI (e.g., ODBLAPM model 128) can increase a PL2 level, for example, if estimated performance is too slow. AI can start at a PL2 level (e.g., a low PL2 level) and increment to the best (e.g., optimal) level. The AI learns the (e.g., best) PL2 level while a user uses one or more applications (e.g., while battery 142 is discharging). AI can remember the level learned and reuse it during subsequent usage of computing device 102. For example, AI may learn that target performance (e.g., as indicated from user experience/input) includes a 200ms reaction time when opening Microsoft's PowerPoint (PPT) application. ODBLAPM 128 can learn continuously, periodically, aperiodically, etc.

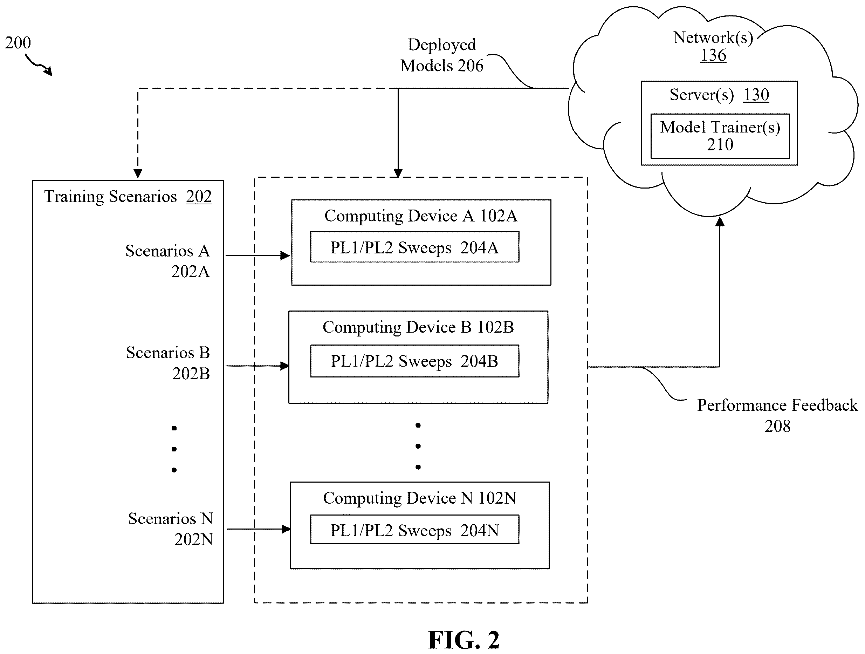

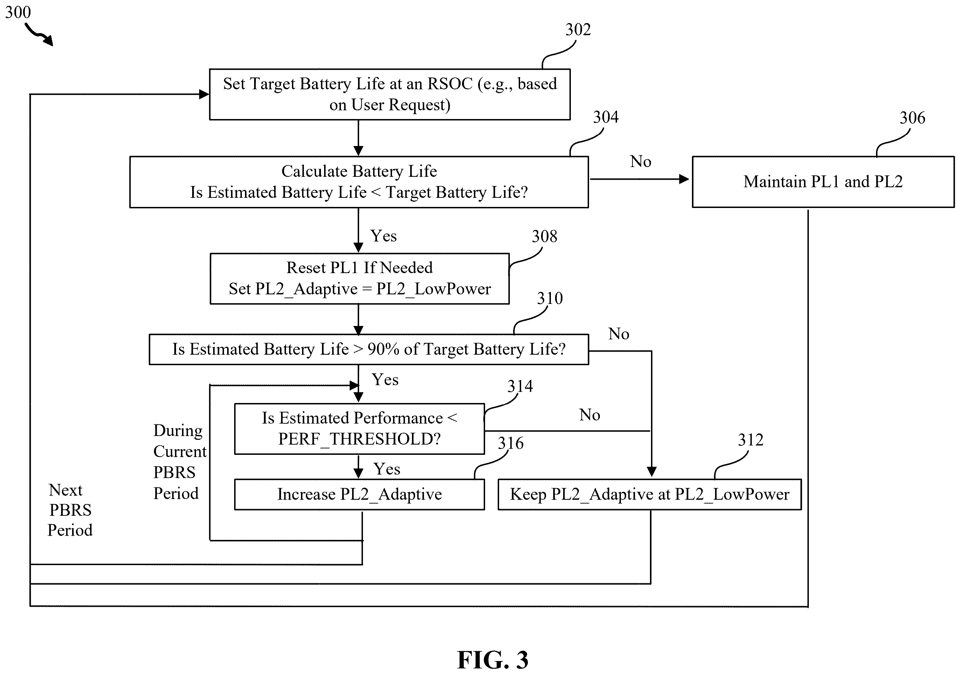

Computing device 102 may execute a model trainer 150, which include one or more executable program used to train ODBLAPM model 128 (see, e.g., example trainer shown in FIG. 3). For example, model trainer 150 may perform supervised machine learning using labeled samples that indicate accurate predictions of adaptive PL limits based on various types of inputs indicating scenarios that may be recognized and grouped or categorized. Model trainer 150 may divide samples into training, testing, and evaluation/validation sets of samples to confirm PL limit prediction accuracy of ODBLAPM model 128 during and/or after training. Model trainer 150 may train ODBLAPM model 128 based on positive examples (e.g., based on features indicating accurate predictions) and negative examples (e.g., based on features indicating inaccurate predictions). In some examples, e.g., as shown by example in FIG. 2, ODBLAPM model 128 may be trained by model trainer 152 executed by server(s) 130.

The ML model training can be conducted directly on computing device 102 (e.g., on-device training) through one or more model training programs designed to identify the most appropriate (e.g., optimal) PL1/PL2 settings, e.g., as a starting point. A model training program (e.g., TRAINING PROG INIT) may cover a majority of application and operating system (OS) use scenarios (e.g., use cases). An initially trained ML model (e.g., ML Model INIT) may be used while computing device 102 gathers performance feedback 208 (e.g., responsiveness data), which can be utilized to create a refined training application (e.g., TRAINING PROG 2). The iterative process in training may address a limitation that a training program (e.g., TRAINING PROG INIT) may not fully cover 100% of use scenarios. Through this continuous learning, the training program can be updated and improved to better align with real-world usage of computing devices 102A-102N.

Model trainer 150 may train ODBLAPM model 128 to adapt the performance of computing device 102 on demand by temporary adjustment of one or more PL limits when estimated battery life is within a margin of target battery life and estimated performance is less than a target performance. Performance is estimated based on performance metrics, such as processor utilization, operating system events, and application events (e.g., running applications, launch time, input delay, and application load time). An adaptive PL limit (e.g., average PL limit or maximum PL limit) can start at a low-power limit and adaptively increase to an optimized limit based on an analysis of performance metrics. Target performance (e.g., minimum performance level) may be determined by user input or may be learned from user experience. In some examples, PL limits can be adapted based on, for example, a hardcoded mapping of a target performance levels, e.g., instead of based on a machine learning model. Model trainer 150 may train ODBLAPM model 128 to generate adjustments of multiple PL limits to enable more precise control of power consumption by computing device 102, by setting, for example, a maximum PL that prevents high levels of power consumption, and/or an average PL that can allow power consumption spikes over short periods while constraining long term power consumption.

For example, trained ODBLAPM model 128 can be trained to dynamically control the discharge rate of the battery 142 by dynamically adapting at least one PL limit of the computing device 102 to align the remaining battery life with a target battery life. The model trainer 150 receives performance feedback from the computing device 102 comprising performance parameters indicating performance of the computing device 102 based on the dynamically adapted PL limit. The model trainer estimates performance of the computing device 102 based on the performance parameters. The model trainer 150 trains ODBLAPM model 128 to increase performance on demand by temporarily increasing the dynamically adapted PL limit if the estimated performance is less than a target performance and if the estimated remaining battery life is within a margin of the target battery life.

Data 122 can include any type or category of data, such as input data, intermediate data, output data, raw data, calculated data, model training data, model inference data, etc. Data 122 includes performance feedback data that can be used by ODBLAPM 126 (e.g., ODBLAPM model 128) to determine (e.g., estimate) performance of computing device 102 at prevailing adaptive PL limits with adaptive performance control. For example, data may include OS events (e.g., OS latency events, such as input delay, launch delay, high utilization), running applications (e.g., browsers, games, programming, media), application events, application data, SoC data (e.g., clock frequencies and utilization of CPU 108, GPU 110, NPU 112, microcontroller 114), user data, user inputs (e.g., preferences, such as battery life target, performance target), power mode, battery state of charge, battery discharge rate, target battery life, estimated battery life, target performance, estimated performance, power level (PL), adaptive PL limit(s), lookup tables (LUTs) for logic or mapping, ML training data sets and/or input inference data sets for ODBLAPM model 128, etc. Performance feedback data may include, for example, application launch time, keyboard input response time, basic file and mail interactions, application switching, webpage load time, team interactions, resume from sleep state, cold boot, fast boot, hibernate, resume, etc.

Performance feedback data may also be determined based on what a user sees and/or experiences. For instance, in an embodiment, a camera or other screen monitoring feature may be used to capture performance based on what the user experiences when interacting with the computing device, and/or the performance of the computing device as evident on a display screen (e.g., responsiveness to pointer clicks, speed of launches), while PL1 and PL2 are changed. In one example, a device record feature (e.g., a recording application, device recording powered by artificial intelligence, etc.) is executed (e.g., by CPU 108, GPU 110, NPU 112, and/or uC 114) that: sweeps PL1 and PL2 on applications and event, while monitoring the responsiveness of each device operation (e.g., events, applications, loading operations, etc.) after a mouse click or other initiating action. In another example, camera video is captured to monitor responsiveness. The captured video is post processed to assess how fast events, application activity, loading operations, etc., are performed in response to mouse click or other initiating operation. In each case, the collected responsiveness information may be stored as data 122 and provided to model trainer 210 (FIG. 2) to train one or more models.

Data 122 may be read and/or written by CPU 108, GPU 110, NPU 112, microcontroller 114, etc., e.g., during execution of applications 124, including ODBLAPM 126 and/or ODBLAPM model 128.

Battery 142 provides portable power to computing device 102. Battery 142 may be, for example, a Lithium ion battery, e.g., 3-cell 3.6V (10.8V) Li-ion battery, 4-cell 3.7V (14.8V) Li-ion battery, etc. Battery 142 is charged by charger 140. Battery 142 provides power to computing device 102 through charger 140 and voltage regulator 138. Power (PWR) output by battery 142 to charger 140 may be determined by battery voltage Vbat and battery current Ibat, which may be communicated as data to charger 140 on a communication bus. As shown by example in FIG. 1, battery 142 may include a communication (e.g., data/control) bus connection with charger 140 and/or computing device 102 (e.g., via I/F(s) 106). The communication bus may be, for example, an I2C bus, a system management (SM) bus, etc. Data indicated on the communication bus may include (e.g., as shown by example in FIG. 1), system power (Psys), battery voltage (Vbat), battery current (Ibat), battery relative state of charge (RSOC), etc., which may or may not be determined and indicated by battery 142.

Charger 140 is configured to charge battery 142 (e.g., with power supplied through voltage regulator 138) and to pass battery power from battery 142 to voltage regulator 138. Charger 140 can be configured with a communication (e.g., data/control) bus connection with voltage regulator 138, battery 142, and/or computing device 102 (e.g., via I/F(s) 106). The communication bus may be, for example, an I2C bus, an SM bus, etc. Data indicated on the communication bus may include, for example, Psys, Vbat, That, RSOC, etc., which may or may not be determined and indicated by charger 140.

Voltage regulator 138 is configured to generate and regulate voltages utilized by components of computing device 102. Voltage regulator 138 may be, for example, a DC-to-DC converter. Voltage regulator 138 may generate, for example, regulated voltages AN indicated as VregA - VregN. For example, voltage regulator may generate 3.3V, 5V, and other voltages utilized by components of computing system 102. Voltage regulator 138 may be a switching voltage regulator with a controller configured to control one or more parameters (e.g., duty cycle) as a function of battery current Ibat and voltage Vbat based on a control law, such as P, PI, or PID, where P is proportional, I is integral, and D is derivative. An adapter, e.g., with an alternating current (AC) to direct current (DC) converter (not shown), may be coupled to voltage regulator 138 to provide power to computing device 102 and/or to charge battery 142. Voltage regulator 138 can be configured with a communication (e.g., data/control) bus connection with charger 140 and/or computing device 102 (e.g., via I/F(s) 106). The communication bus may be, for example, an I2C bus, an SM bus, etc. Data indicated on the communication bus may include, for example, Psys, Vbat, Ibat, RSOC, etc., which may or may not be determined and indicated by voltage regulator 138.

As shown in FIG. 1, in some implementations, one or more aspects (e.g., all of) ODBLAPM 126 and/or ODBLAPM model 128 may be implemented remotely, e.g., by server(s) 130. For example, computing device 102 and server(s) 130 may be communicatively coupled by network(s) 136. Network(s) 136 may include one or more public access and/or restricted (e.g., private) access networks, which may be wired and/or wireless. Network(s) 136 may include, for example, one or more of any of a local area network (LAN), a wide area network (WAN), a personal area network (PAN), a combination of communication networks, such as the Internet, and/or a virtual network. In an implementation, remote computing device 102 and server(s) 130 communicate via one or more application programming interfaces (APIs), and/or according to other interfaces and/or techniques. Remote computing device 102 and server(s) 130 include one or more network interfaces (e.g., I/F(s) 106) that enable communications between devices. Examples of such a network interface, wired or wireless, may include, for example, an IEEE 602.11 wireless LAN (WLAN) wireless interface, a Worldwide Interoperability for Microwave Access (Wi-MAX) interface, an Ethernet interface, a Universal Serial Bus (USB) interface, a cellular network interface, a Bluetooth™ interface, a near field communication (NFC) interface, etc. Further examples of network interfaces are described elsewhere herein.

Server(s) 130 may be any type of stationary or mobile computing device, including a mobile computer or mobile computing device (e.g., a personal digital assistant (PDA), a laptop computer, a notebook computer, a tablet computer, a netbook, etc.), a mobile phone, a wearable computing device, or other type of mobile device, or a stationary computing device such as a desktop computer or PC (personal computer), or a server. Server(s) 130 may comprise one or more computing devices, servers, services, local processes, remote machines, web services, etc. In an example, server(s) 130 may comprise a server located on an organization's premises and/or coupled to an organization's local network, a remotely located (e.g., third party) server, a cloud-based server (e.g., one or more servers in a distributed manner), or any other device or service that may host, manage, and/or provide resource(s) for on-demand battery life and adaptive performance management. Server(s) 130 may be implemented as a plurality of programs executed by one or more computing devices. Server(s) 130 is not limited to physical machines, but may include other types of machines or nodes, such as a virtual machine, that are executed in physical machines. An example server(s) 130 with example features is presented in FIG. 7.

Server(s) 130 (e.g., when implementing one or more aspects of on-demand battery life and adaptive performance management), includes an executable on-demand battery life and adaptive performance manager (ODBLAPM) 132. Server(s) 130 may be coupled to many computing devices (not shown), for example, to train and deploy ODBLAPM model 134 as ODBLAPM model 128 for one or more computing devices and/or to execute ODBLAPM 132 with trained ODBLAPM model 134 on behalf of one or more computing devices, receiving and using data (e.g., data 122) to determine and return on-demand battery life and adaptive performance operating parameters (e.g., adaptive PL limit(s)) to the one or more computing devices utilizing server(s) 130. As described herein, ODBLAPM 132 may be similar to ODBLAPM 126 and ODBLAPM 134 may be similar to ODBLAPM 128, except for multiple computing devices. ODBLAPM 132 and/or ODBLAPM 134 may make similar determinations to control computing devices with similar battery life targets, similar performance targets, and similar performance feedback similarly.

In some examples, server(s) 130 may execute a model trainer 152, which includes one or more executable program used to train ODBLAPM model 128 (see, e.g., example trainer shown in FIG. 3) and/or ODBLAPM model 134, which may be deployed as ODBLAPM model 130. For example, model trainer 152 may perform supervised machine learning using labeled samples that indicate accurate predictions of adaptive PL limits based on various types of inputs indicating scenarios that may be recognized and grouped or categorized. Model trainer 152 may divide samples into training, testing, and evaluation/validation sets of samples to confirm PL limit prediction accuracy of ODBLAPM model 128 and/or ODBLAPM model 134 during and/or after training. Model trainer 152 may train ODBLAPM model 128 and/or ODBLAPM model 134 based on positive examples (e.g., based on features indicating accurate predictions) and negative examples (e.g., based on features indicating inaccurate predictions).

FIG. 2 shows a block diagram of a training system 200 configured for network-based training of on-demand battery life with adaptive performance manager (ODBLAPM) models for multiple computing devices, according to an embodiment. As shown in FIG. 2, training system 200 includes a plurality of computing devices (A-N) 102A-102N and one or more servers 130. In the example of FIG. 2, server(s) 130 is/are included in one or more networks 136, though this is not required. Each server 130 includes one or more model trainers 210. Model trainer(s) 210 train machine learning ODBLAPM models based on one or more training scenarios 202. Training system 200 is described in further detail as follows.

Example training system 200 trains ML models for each computing device 102A-102N to adapt one or more target power levels (e.g., PL1, PL2) in response to each scenario in training scenarios 202. The target (e.g., optimal) power level(s) (e.g., adaptive PL1, PL2) generated by the models in each computing device may vary based on the build of each computing device. The (e.g., optimal) PL1/PL2 values generated by the ML Model for each computing device 102 may compensate for (e.g., minimize) performance variations between device-to-device builds or stock keeping units (SKUs). For example, computing device A 102A may be built with the following components: an Intel i7 SOC, Hynix 32GB LP5 memory, and a 512GB Samsung SSD). Computing device B 102B may be built with the following components: Intel i5 SOC, Micron 16GB LP5 memory, and 256GB Hynix SSD. Computing devices A-N may be the same or different. Without an ML model-based approach, computing device A 102A might deliver faster or better performance at the same PL1/PL2 settings than computing device B 102B. An ML model-based approach may reduce performance variation across different SKUs by leveraging a trained ML model on each device to identify optimal performance settings for each specific device to align with each set of customer-specific preferences.

Computing devices A-N 102A-102N have access to training scenarios 202 and PL1/PL2 sweeps 204A-204B, which may be received from server(s) 130, preloaded, etc. Training scenarios 202 may include, for example, instructions to perform web browsing operations (e.g., loading, tab addition), perform productivity application operations, perform video conferencing operations, perform operating system events, etc. Training scenarios A-N 202A-N may be determined, for example, based on the respective configuration of computing devices A-N 102A-N (e.g., since device A may have a different set of software installed than device B). PL1/PL2 sweeps 204A-204N include PL1 and PL2 configurations that computing devices A-N 102A-102N apply (e.g., for each of various power modes) while performing each training scenario in the series of training scenarios for the respective computing device.

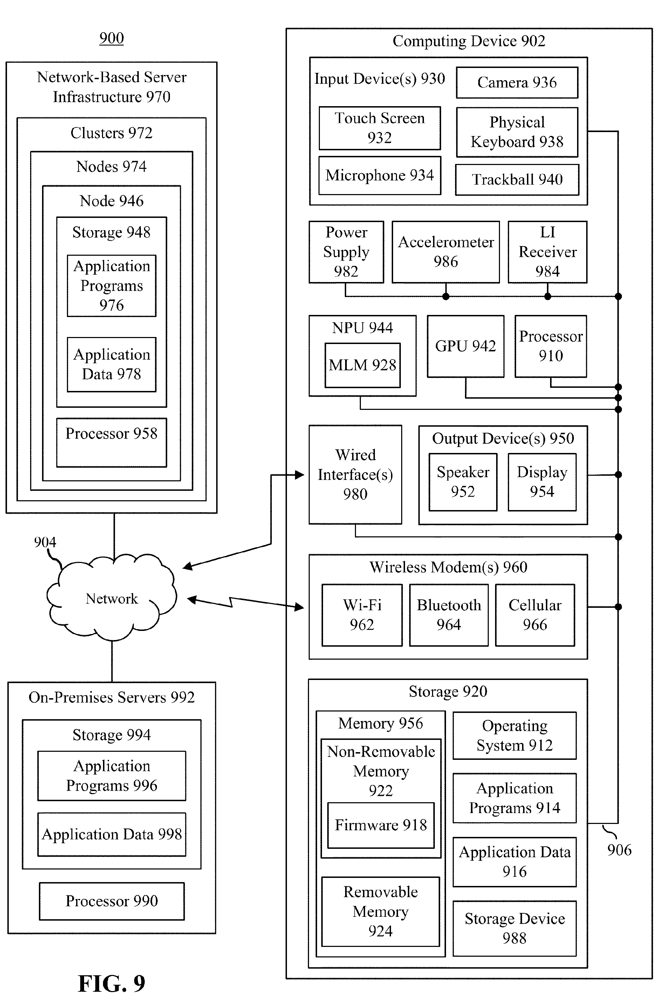

During training, computing devices A-N 102A-102N apply respective training scenarios 202A-N and PL1/PL2 sweeps 204A-N to generate performance feedback 208 (e.g., responsiveness parameters at PL1/PL2 sweeps for each scenario). Server(s) 130, coupled to computing devices A-N 102A-N via network(s) 130 receive the performance feedback 208. Performance feedback (e.g., syntax Perf_feedback) may refer to real-time performance metrics, such as processing time information (e.g., app loading time, app responsiveness, etc.). Model trainer(s) 210 train a model for each respective computing device A-N 102A-102N based on the performance feedback 208 generated based on application of PL1/PL2 sweeps for each scenario. Model training may be based on default or custom (e.g., user-preferred) performance parameters for one or more scenarios. The performance parameters may not be necessary for a trained model, e.g., given that the model is trained on device performance for each scenario, meaning the model only needs to receive the scenario to generate target/adaptive PL limits. Further example techniques for model training are disclosed below with respect to FIGS. 3 and 9 (with respect to a machine learning model 928), which are applicable to being performed by a model trainer 210.

Server(s) 130 deploy trained models generated by model trainer(s) 210 to respective computing devices A-N 102A-102N. Computing devices 102A-102N receive deployed models 206 from server(s) 130, for example, when computing devices 102A-102N do not implement a model trainer. Each model may be adapted to the SKU of each computing device. The received models may be further trained by each computing device and/or by model trainer(s) 210, for example, to adapt one or more power level settings (e.g., adaptive PL1, PL2 settings) based on user performance preferences in one or more scenarios.

FIG. 3 shows a flow diagram of a model training process for providing on-demand battery life with adaptive performance control, in accordance with an embodiment. Embodiments disclosed herein and other embodiments may operate in accordance with examples shown in FIGS. 1 and 2.

Training can be performed using a set of applications, such as example method 300, to identify (e.g., the best or optimized) PL1/PL2 settings during a training process, which may result in an initial model for computing device 102. An initial model may be revised or updated through one or more training applications, which may adjust the generation of PL1/PL2 settings generated by the initial model. A training program can use more parameters than described herein, e.g., OS Events, App Events, App info, device skin temp, target battery life, etc. For example, a training program may (e.g., also) use SoC SKU information, SSD part number, memory configuration, etc. As indicated in FIGS. 1 and 2, training may be performed locally on computing device 102 and/or remotely on external devices, such as cloud devices, based on data provided by computing device 102.

Method 300 shows an example of training a model executed by computing device 102 or server(s) 130 to dynamically regulate battery discharge periodically during use (e.g., indicated by the discharge rate exceeding a threshold rate of discharge) by adaptive configuration of PL limits (e.g., PL1, PL2). Method 300 comprises steps 302-316. For example, steps 302-316 may be implemented by one or more of model trainers 210 based on knowledge of training scenarios 202, PL1/PL2 sweeps, and performance feedback 208. However, other embodiments may operate according to other methods, such as described with respect to FIG. 9. Other structural and operational embodiments will be apparent to persons skilled in the relevant art(s) based on the foregoing discussion of embodiments. No order of steps is required unless expressly indicated or inherently required. There is no requirement that a method embodiment implement all of the steps illustrated in FIG. 3. FIG. 3 is simply one of many possible embodiments. Embodiments may implement fewer, more or different steps.

Method 300 comprises step 302. In step 302, a target battery life is set at a state of charge (e.g., RSOC) of computing device 102. For example, as shown in FIG. 1, a user can select or otherwise input a requested battery life through operating system 118. As shown in FIG. 2, model trainer(s) 210 can determine a target battery life based on performance feedback 208. The state of charge of computing device 102A-102N at the time target battery life is determined may be, for example, 100% or a lesser state of charge.

In step 304, remaining battery life is calculated (e.g., estimated), for example, based on PBRS, and compared to the target battery life. For example, as shown in FIG. 1, model trainer(s) 210 estimates the remaining battery life of battery 142 based on the calculated PBRS. Model trainer(s) 210 then compares the target battery life to the estimated battery life. Model trainer(s) 210 may be aware of PL limits associated with the estimated battery life and target battery life, e.g., allowing a comparison of PL limits associated with estimated battery life and target battery life.

In step 306, in response to a determination that the estimated battery life is greater than the target battery life, the PL limits PL1 and PL2 are maintained (e.g., at the best performance mode). For example, as shown in FIG. 2, model trainer(s) 210 leaves PL1 and PL2 at their current values (e.g., associated with a current performance level, such as the best performance level) based on a determination that the estimated battery life is greater than the target battery life. The method proceeds from step 306 to step 302 at the start of the next PBRS period.

In step 308, in response to a determination that the estimated battery life is less than the target battery life, PL1 is reset (e.g., if needed) and PL2 is set to an initial value of PL2_LowPower, which is associated with a battery life and a performance level. For example, as shown in FIG. 2, model trainer(s) 210 resets PL1 (e.g., to an initial or default limit value), for example, if model trainer(s) 210 determines that the average power needs to be reset to align remaining battery life with the target battery life. Model trainer(s) 210 sets PL2 to an initial value of PL2_LowPower as a starting point before determining whether PL2 can be increased. The method proceeds from step 306 to step 310.

In step 310, a determination is made whether the estimated battery life is greater than a margin (e.g., 90%) of the target battery life. For example, as shown in FIG. 2, model trainer(s) 210 determines whether the estimated battery life is greater than a margin (e.g., 90%) of the target battery life to decide whether to proceed to step 312, maintaining PL2_Adaptive at PL2_LowPower for the remainder of the current PBRS period, or step 314 to consider whether to increase PL2_Adaptive in the current PBRS period.

In step 312, in response to a determination that estimated battery life is equal to or less than 90% (the margin, for example) of the target battery life, PL2_Adaptive is maintained at PL2_LowPower. Also, in response to a determination that estimated performance is equal to or greater than target performance, PL2_Adaptive is maintained at PL2_Low-

Power. For example, as shown in FIG. 2, model trainer(s) 210 maintains adaptive PL2 at a low power limit (e.g., without a performance boost) during the remainder of the current PBRS state in response to a determination that estimated battery life is equal to or less than 90% of the target battery life, insufficient to permit a performance boost because it would further misalign the remaining battery life and the target battery life.

In step 314, in response to a determination that estimated battery life is greater than 90% of the target battery life, a determination is made whether estimated performance (e.g., based on performance feedback) is less than target performance (PERF_THRESHOLD). The method proceeds from step 314 to step 316 if the estimated performance is less than the target performance. The method proceeds from step 314 to step 312 if the estimated performance is equal to or greater than the target performance. For example, as shown in FIG. 2, model trainer(s) 210 determines whether estimated performance (e.g., based on performance feedback) is less than target performance (PERF_THRESHOLD) in response to a determination that estimated battery life is greater than 90% of the target battery life. As shown in FIG. 2, model trainer(s) 210 determines whether the target performance PL2 is less than estimated performance (e.g., based on performance feedback 208) to determine whether to consider changing adaptive PL2. Model trainer(s) 210 maintains adaptive PL2 if the estimated performance is equal to or greater than the target performance (e.g., indicated by target performance PL2). Model trainer(s) 210 increases adaptive PL2 if the estimated performance is less than the target performance (e.g., indicated by target performance PL2).

In step 316, PL2_Adaptive is increased in response to a determination that estimated performance is less than the target performance, following a determination that estimated battery life is within a margin (e.g., 90%) of target battery life, indicating that a performance boost is allowable during all or a portion of the current PBRS period. For example, as shown in FIG. 2, model trainer(s) 210 increases adaptive PL2 in response to a determination that the estimated performance is less than the target performance (e.g., indicated by target performance PL2), following a determination that estimated battery life is within a margin (e.g., 90%) of target battery life, indicating that a performance boost is allowable during all or a portion of the current PBRS period.

As described by example in FIG. 3, PL2_LowPower may be a minimum threshold that allows computing device 102 to operate at a level that delivers acceptable user satisfaction, e.g., for one or more scenarios, such as selected applications. The PL2_LowPower level may be sufficiently low to provide an adequate user experience in one or more applications and moment of use cases. PL2_Adaptive dynamically adjusts a PL2 to a higher level during certain scenarios (e.g., specific applications or use cases), for example, when the available battery life margin allows for it.

The "PERF_THRESHOLD" parameter may not be a single, universal value. For example, the PERF_THRESHOLD for an OS application launch time could be set at 100 ms, the PERF_THRESHOLD for an for a file open event may be set at 10 ms, and the PERF_THRESHOLD for game launches or video call startup/loading times may be set at 3 ms. In some examples, the PERF_THRESHOLD may represent a non-time-based parameter, e.g., depending on the context. During the training process, the PL2 level is dynamically adjusted based on the PERF_THRESHOLD reference. During training, performance feedback 208, such as responsiveness from apps or OS events may be compared with the PERF_THRESHOLD to determine appropriate (e.g., optimal) PL1/PL2 settings.

A training program (e.g., as shown in part in FIG. 3) may be executed multiple times (e.g., over time) to refine and enhance the trained ML model (e.g., ODBLAPM model 128). Following the initially trained ML Model (e.g., ML Model INIT), subsequent iterations through one or more other programs (e.g., TRAINING PROG 3, 4, and so on) may lead to the development of a finally trained ML model.

In some examples, an on-demand battery life mode (e.g., default or user-selected operating mode of computing device 102) may adjust PL1/PL2 to an appropriate level that optimizes PL2 without reaching the higher PL2 levels defined in the "Best Performance" mode of operation of computing device 102.

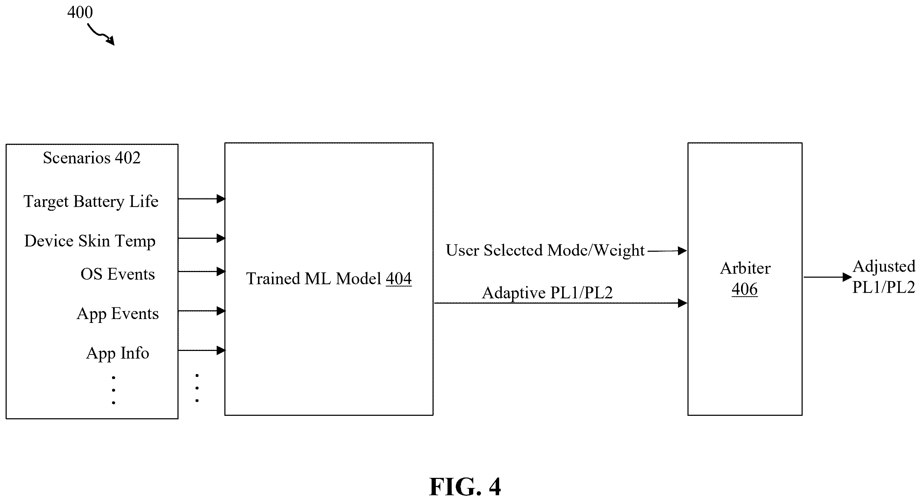

FIG. 4 shows a block diagram of an on-demand battery life with adaptive performance manager (ODBLAPM) 400 utilizing a trained ML model 404 (e.g., ODBLAPM model), according to an embodiment. The example ODBLAPM 400 shown in FIG. 4 provides adaptive control of an average PL limit (PL1) and a maximum PL limit (PL2) for computing device 102 based on one or more scenarios 402 (e.g., target battery life, estimated battery life, device skin temperature, OS events, application (app) events, app information (info), etc.), which may be stored as data 122. ODBLAPM 400 determines adaptive PL limit(s) (e.g., average PL limit (PL1) and/or PL2) for target battery life, for example, to align an estimated remaining battery life of computing device 102 with the target battery life of computing device 102. As shown in FIG. 4, ODBLAPM 400 comprises a trained ML model (e.g., ODBLAPM model) 404 and an arbiter 406. ODBLAPM 400 is described in further detail as follows.

Trained ML model 404, which may be trained as described further above or elsewhere herein, generates target/adaptive PL limits (e.g., PL1/PL2) based on the scenario presented by scenarios 402 and arbiter 406 decides whether to accept or adjust the target/adaptive PL1/PL2, for example, based on whether a user indicated a selected power mode and/or an adjustment to performance (e.g., a weight), resulting in output of an adjusted PL1/PL2. In this manner, arbiter 406 advantageously allows a change in one or more PLs to a generated PL if the generated PL satisfies a user indication for power mode, thereby keeping the one or more PLs aligned with user preference.

User Selected Mode/Weight, e.g., if/when applicable, may be used by arbiter 406 to (e.g., slightly) amplify/lower the adaptive/target performance PL1/PL2, for example, when a user indicates a preference for higher/lower performance. Alternatively, the user can override adaptive (e.g., optimal) PL1/PL2 with an operational slider setting for an operating mode of computing device 102 (e.g., Recommended Mode, Better Performance, or Best Performance).

Trained ML model 404 may be any type of model that makes a prediction, e.g., based on performance feedback data. The model may be a machine learning model that uses neural networks for complex pattern prediction. The model may be, for example, a convolutional neural network (CNN) model, a long short-term memory (LSTM) model, or other suitable type of model.

Trained model 404 is trained to correlate adaptive PL limits (e.g.., PL1, PL2) based on received scenarios 402 indicated by scenario information for computing device 102, such as target battery life, device skin temperature, OS events, application (app) events, app information (info), etc. In other words, trained model 404 determines target PL1/PL2 limits to apply to computing device 102 to allow computing device 102 (e.g., with power distributed among relevant components) to achieve a particular battery life at a particular (e.g., varying) performance level allowed by adaptive PL limits (e.g., PL1, PL2). Trained ML model 404 may generate target/adaptive PL1/PL2 values based on a target performance that represents a minimum acceptable or expected performance level (e.g., as a default, as a user request, and/or based on experience of one or more users of computing device 102). An example syntax for target performance may be, for example, PERF_THRESHOLD.

Target performance indicated by target/adaptive PL limits may be a default level of performance, a requested level of performance, a level of performance determined based on user experience, a level of performance based on performance feedback indicating actual performance, an arbitrated level of performance, etc. Adaptive PL1/PL2 (e.g., associated with a target performance) can be determined in a variety of ways in a variety of examples. In some examples, adaptive PL1/PL2 can be mapped to performance levels (e.g., in a look up table in memory), where selection of a performance level provides the adaptive PL2 or vice versa. In some examples (e.g., as shown in FIG. 4), adaptive PL1/PL2 can be determined using a trained ML model (e.g., ODBLAPM model) 404 that receives input indicating scenarios 402. In some examples (e.g., as shown in FIG. 4), for each time period in a time series of operation of computing device 102, target/adaptive PL1/PL2 values associated with target battery life and a user selected power mode/weight may be considered by arbiter 406 to determine whether to adjust the adaptive PL1/PL2 values generated by the trained ML model 404 to apply to computing device 102 (e.g., per time period or window of time per period).

Adaptive PL1/PL2 output by trained ML model 204 effectively determines a target performance level of computing device 102 for the indicated scenario. The scenario information in scenarios 402 may vary (e.g., more, fewer, alternative inputs) in a variety of examples. Trained ML model 404 can use the inputs to identify or recognize an input pattern and a performance level associated with the input pattern. The scenario 402 may indicate a known or new use scenario, e.g., indicating which applications are being used (e.g., word processing, gaming, browsing). Trained ML model 404 can learn (e.g., be trained on) new input patterns, for example, in continuous training. Trained ML model 404 can be used to determine a target performance based on adaptive PL1/PL2 for any computing device, regardless of build..

ODBLAPM 126 may apply adaptive PL1/PL2 output by trained ML model 404 to computing device 102 or (e.g., as shown by example in FIG. 4) may apply post-processing to arbitrate between multiple values of PL1/PL2, which may have competing purposes. The example shown in FIG. 4 applies post-processing in the form of arbiter 406 to arbitrate between PL1 and/or PL2 values associated with a user selected mode/weight and adaptive PL1/PL2 determined by trained model 404. For example, a user may have requested a percentage increase in performance, which may be translated to a weight to apply to adaptive PL1/PL2 to generate an adjusted PL1/PL2.

Arbiter 406 may determine whether to allow a requested increase or decrease in performance based on a user selected mode or weight. Arbiter 206 receives the adaptive PL1/PL2 determined by ML model 404 and an indication whether a user selected a power mode or performance weight that could alter the adaptive PL1/PL2. Adaptive PL1/PL2 may represent a PL1/PL2 determined to align estimated remaining battery life with a target battery life while achieving a target battery life.

Arbiter 406 may represent post-processing logic applied to the output of ML model 404. Arbiter 406 can be configured to determine which PL1/PL2 to apply as for the current time period or cycle of operation (e.g., or a window in the period/cycle of operation) of computing device 102. Arbiter 406 includes logic to make the determination. For example, arbiter 406 can select adaptive PL1/PL2, a user selected PL1/PL2 associated with user selected mode/weight, or blend the two, e.g., by modifying adaptive PL1/PL2. For example, arbiter 406 can determine adjusted PL1/PL2 as a weighted average of adaptive PL1/PL2 and the PL1/PL2 associated with the user-selected mode/weight. In some examples, arbiter 406 can be configured to determine a time window in a time period/cycle of operation of computing device 102 for which to apply adjusted PL1/PL2 to computing device 102. In this manner, arbiter 406 advantageously enables the adjusted PL1/PL2 to be applied to computing device 102 at a time that does not reduce performance of computing device 102, while enhancing battery life.

ODBLAPM 400 may apply the adjusted PL1/PL2 to computing device 102 for a time period/cycle or for a time window in the time period/cycle (e.g., as may be determined by arbiter 406 or otherwise by ODBLAPM 400). In some examples, adjusted PL1/PL2 may provide or may be associated with (e.g., mapped to) more specific information, such as component level power settings (e.g., for CPU, GPU, NPU, uC) for the time period/cycle or window of time within the period/cycle of operation of computing device 102. For example, adjusted PL1/PL2 may be implemented at the component level using dynamic voltage and frequency scaling (DVFS) applied to one or more components (e.g., CPU, GPU, NPU, uC).

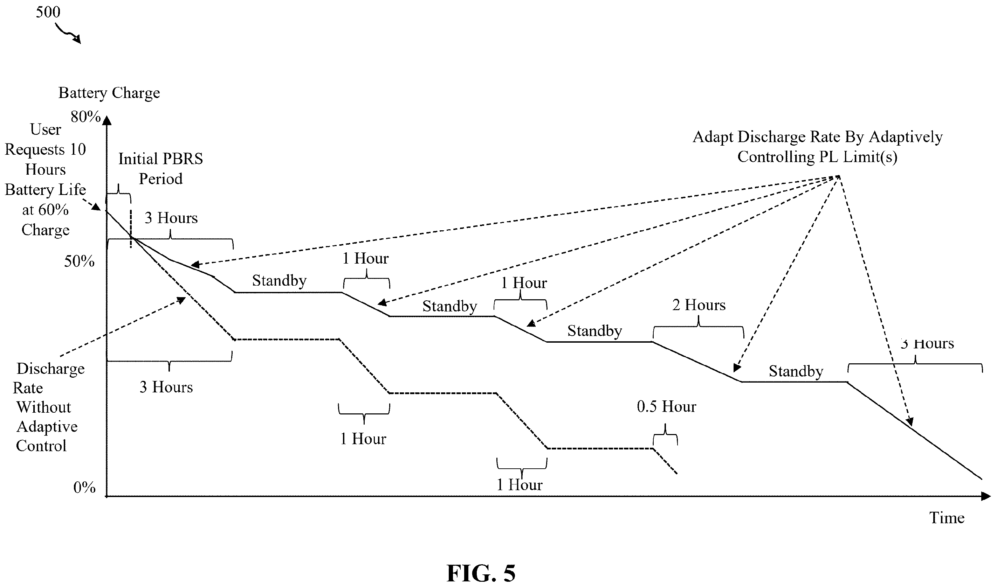

FIG. 5 shows an example plot 500 of battery life using an adaptive discharge rate versus battery life without using an adaptive discharge rate, in accordance with an example embodiment. FIG. 5 shows an example battery discharge plot 500 with and without adaptive control of the discharge rate during use of computing device 102. In the example shown in FIG. 5, a user requests 10 hours of operational battery life at a point in time when the battery has 60% charge remaining. As indicated, the discharge rate shown in dashed lines represents the discharge of the battery without adaptive control of the discharge rate. Not counting standby periods, starting at 60% charge, the battery provides approximately 5.5 cumulative hours of operation (e.g., 3 hours, 1 hour, 1 hour, and 0.5 hours) without adaptive control of the battery discharge rate. In contrast, the battery provides the requested 10 hours of cumulative operation (e.g., target battery life) with adaptive control of the battery discharge rate during periods of operation. The adaptive discharge rate control may be provided, for example, by ODBLAPM 126/400.

As shown in FIG. 5, the adaptive discharge rate controller (e.g., ODBLAPM 126/400) may begin with an initial period (e.g., initial PBRS period) to estimate the average discharge rate (e.g., based on calculation of PBRS). ODBLAPM 126/400 may operate, for example, in accordance with the model training method shown in FIG. 3, beginning with the initial PBRS period, and continuing with subsequent (e.g., periodic) periods during operation of computing device 102. As shown in FIG. 5, ODBLAPM 126/400 decreases the slope of the discharge rate based on the estimated battery life (e.g., determined based on initial PBRS) compared to the 10 hour target battery life. ODBLAPM 126/400 adaptively control PL limits (e.g., PL1 and PL2), for example, as indicated in the model training method shown in FIG. 3. The example shows five distinct periods of operation, e.g., 3 hours, 1 hour, 1 hour, 2 hours, and 3 hours. As shown in FIG. 5, ODBLAPM 126/400 adjusts the rate of discharge, as needed, to extend the operational battery life to the 10 hour target battery life. ODBLAPM 126/400 dynamically regulates the battery discharge slope over periods of RSOC (Relative State of Charge) changes in the time series and managed through adaptive PL configurations (e.g. PL2_Adaptive) during application use.

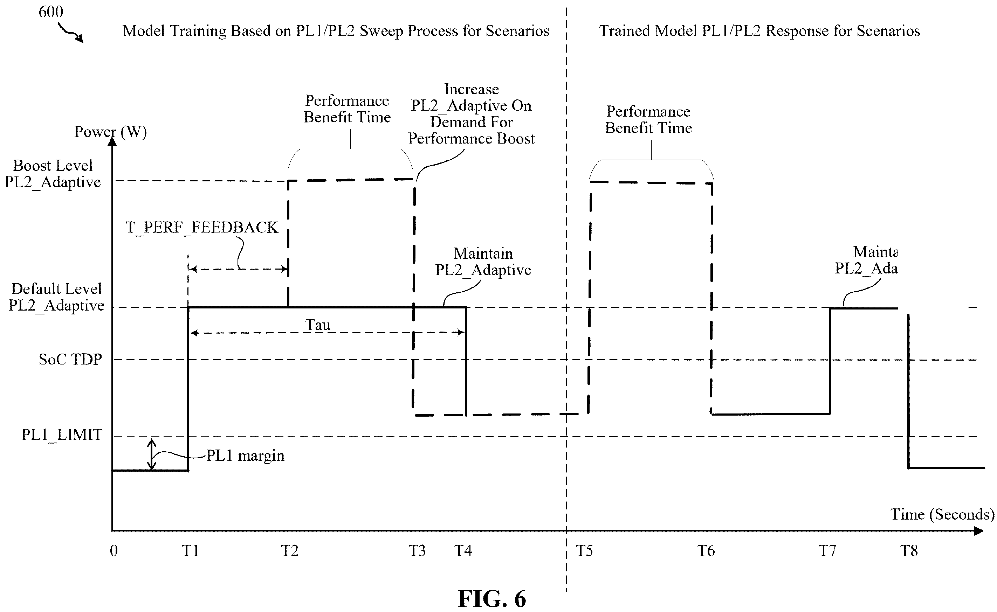

ODBLAPM 126/400 may (e.g., also) provide adaptive on-demand performance boosting during periods of operation while adaptively managing the discharge rate of battery 142 to provide the 10 hour target operational (e.g., on-demand) battery life. An example of adaptive performance control provided by a trained ML model (e.g., ODBLAPM model 128) in ODBLAPM 126/400 is shown in FIG. 6.

FIG. 6 shows an example plot 600 of model training and trained model performance of adaptive on-demand performance boosting during periods of adaptive battery discharge rate control, in accordance with an embodiment. FIG. 6 shows the decision-making involved in the model training process based on scenario information performed during PL1/PL2 sweeps and associated performance feedback information shown in FIGS. 2 and 3 as well as the decision-making of a trained model (e.g., or algorithm) based on scenario information shown in FIGS. 1 and 4. The on-demand performance boosting shown in FIG. 6 may occur periodically, for example, during periods of discharge (e.g., active use of computing device 102) shown in FIG. 5.

As shown in FIG. 6, performance may be adaptively enhanced (e.g., and optimized) as needed by adapting PL temporarily. The adaptive on-demand performance shown in FIG. 6 may occur, for example, during the ten hours of use of computing device shown in FIG. 5 between periods of standby mode. Example adaptive performance power profile plot 600 shows time in seconds on the x-axis and power in Watts on the y-axis. The average PL limit (PL1), SoC thermal design power (TDP), and default adaptive maximum PL limit (PL2_Adaptive) are shown as dashed lines. Default PL2_Adaptive may be, for example, a low power PL2_LIMIT, which may be the (e.g., default) starting point (e.g., PL2_LowPower) for performance boosting consideration referred to in step 308 in FIG. 3. The PL for computing device 102 is shown as a solid bold line. A dashed bold line shows on-demand power boosting opportunities that may or may not be implemented (e.g., by ODBLAPM 126/400, such as trained model 128/404). The performance boost time (Tau) may be a default time, a selected time, a determined time, a fixed time, a variable time, an ad hoc (opportunistic) time, etc. For example, a default Tau may be seconds to tens of seconds. Within Tau is a performance feedback time period (T_PERF_FEEDBACK) for performance feedback determination based on real-time performance parameters. Also within Tau is a determined performance benefit time, which may be a default time, a selected time, a determined time, a fixed time, a variable time, an ad hoc (opportunistic) time, etc. For example, trained model 404 may be trained to determine the performance benefit time during Tau. Performance benefit time is the time that a PL limit (e.g., PL2) is adaptively boosted.

As shown in FIG. 6, ODBLAPM 126/400 (e.g., trained model 128/404), at time zero (0), the PL for computing device 102 is below the average power limit (PL1_LIMIT). The margin between PL1_LIMIT and the actual PL of computing device is identified as PL1 margin. At time T1, the PL of computing device 102 rises to default PL2_Adaptive (e.g., in accordance with model training in step 308 in FIG. 3 after determining in step 304 that estimated battery life is less than target battery life). The example in FIG. 6 shows (e.g., consistent with the model training example in FIG. 3) that PL2 may begin at a low-power limit (e.g., by default) with one or more subsequent analyses and decisions that determine whether to adaptively increase PL2 (e.g., based on real-time scenario information). Scenario information may be evaluated (e.g., by ODBLAPM model 128/404) during T_PERF_FEEDBACK between times T1 and T2. At time T2, the PL of computing device 102 may remain at Default PL2_Adaptive (e.g., in accordance with model training step 312 in FIG. 3) or will increase to Boost PL2_Adaptive in an adaptive performance boost (e.g., in accordance with model training step 316 in FIG. 3).

A performance boost from the default level to a boost level of PL2_Adaptive may occur, for example, in response to a trained determination that estimated battery life (e.g., based on PBRS) is within a margin (e.g., 90%) of target battery life and a determination that estimated performance is less than target performance (e.g., in accordance with model training steps 310, 312, and 316 in FIG. 3). ODBLAPM 126/400 (e.g., trained ML model 128/404) may determine the boost level of PL2_Adaptive and the performance benefit time between T2 and T3, which may vary in each period/cycle of analysis (Tau). For example, the boost level and/or performance benefit time of PL2_Adaptive may be application-specific, task-specific, etc., as may be determined from the scenario information. At the end of performance boost at time T3, the PL of computing device 102 may drop to a (pre)defined PL.

PL2_Adaptive may be maintained at Default PL2_Adaptive, for example, in response to a determination that the estimated performance is already greater than the target performance and/or in response to a determination that the estimated battery life (e.g., based on PBRS) is not within the margin of target performance (e.g., in accordance with model training steps 310 and 314 leading to step 312 in FIG. 3). As indicated in FIG. 6, if the PL of computing device 102 remains at the default level of PL2_Adaptive, it remains at the default level for the remainder of Tau (e.g., in accordance with model training step 312 returning to step 302 to await the next Tau or PBRS period). At the end of Tau at time T4, the PL of computing device 102 may drop to a (pre)defined PL.

As use of computing device 102 continues, trained ML model 128/404 trained by the model training method shown in FIG. 3 may continue to evaluate target battery life, estimated battery life (e.g., based on PBRS), target performance, estimated performance or performance feedback parameters, etc. during each period (Tau) to adapt PL1 and/or PL2 to align the estimated battery life with the target battery life and, on demand when permissible, align the estimated performance with the target performance and/or provide performance boosts (e.g., based on performance feedback). For example, a trained analysis may allow another performance boost during a performance benefit time between T5 and T6, but not between T7 and T8, at which time the PL for computing device drops back to the PL at time zero (0).

FIGS. 7A and 7B show power profile plots 700A and 700B, respectively, for a computing device with non-adaptive PL limits (in FIG. 7A) and the computing device adaptive PL limits for on-demand performance boosting during periods of adaptive battery discharge rate control (in FIG. 7B), in accordance with an embodiment. FIG. 7B shows adaptations of PL limits for a set of scenarios contrasted in contrast to fixed PL limits shown in FIG. 7A during the same set of scenarios of utilization of computing device 102. Plots 700A and 700B are described in further detail as follows.

As shown according to plot 700A in FIG. 7A, fixed power limits of average power (PL1) equal to 30 W and maximum power (PL2) equal to 60W are set in accordance with a default or user-selected power mode. The result of fixed power limits is higher average power and peak power usage, which results in a significantly shorter battery life, e.g., as shown in FIG. 5.

As shown according to plot 700B in FIG. 7B, a trained ML model (e.g., ODBLAPM model 128/404) adapts PL limits in response to a set of scenarios, which includes a web browsing operation (e.g., loading the web browser or adding a tab), a productivity application operation, a video conferencing operation, and an operating system operation (e.g., OS event). Plot 700B may or may not include post-processing (e.g., arbitration) of adaptive PL1/PL2 values and Tau output by the trained ML model (e.g., ODBLAPM model 128/404). Example plot 700B shows that the model trainer 150/152/210/300) trained the model (e.g., ODBLAPM model 128/404) to selectively adapt PL1 and PL2 based on real-time scenarios in order to provide performance boosts (e.g., and associated increases in power consumption) as needed while reducing performance (e.g., and associated reductions in power consumption) during other scenarios. In the example shown, PL1 is adaptively varied from 15W to 20W to 15W to 25W across various scenarios while PL2 is adaptively varied from 30W to 50W to 30W to 45W to 30W to 35W to 30W across various scenarios. The performance boosts of PL1 and/or PL2 are associated with the occurrence of scenarios input to the trained ML model (e.g., ODBLAPM model 128/404).

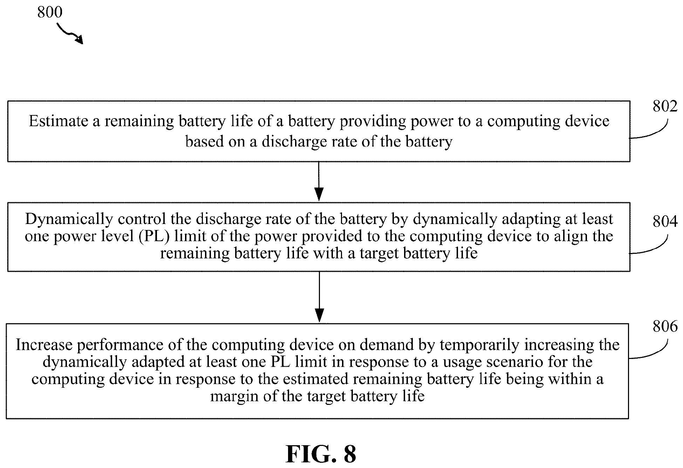

FIG. 8 shows a flowchart 800 of a process for on-demand battery life with adaptive performance control, according to an embodiment. ODBLAPM 126/132/400, ODBLAPM model 128/134/404 may operate according to flowchart 800, e.g., in some embodiments. The example shown in FIG. 8 includes operations 802-806. There is no requirement that a method embodiment implement all of the steps illustrated in FIG. 8. FIG. 8 is simply one of many possible embodiments. Various embodiments may implement one or more operations shown in FIG. 8 with additional and/or alternative steps. Further structural and operational embodiments will be apparent to persons skilled in the relevant art(s) based on the following description of FIG. 8.

Flowchart 800 comprises step 802. In step 802, a remaining battery life is estimated for a battery providing power to a computing device based on a discharge rate of the battery. For example, as shown in FIGS. 1 and 4, ODBLAPM 126/132/400 estimates the remaining life of battery 142 based on a discharge rate (e.g., during usage of computing device 102). The discharge rate may be determined, for example, based on PBRS.

In step 804, the discharge rate of the battery is dynamically controlled by dynamically adapting at least one power level (PL) limit of the power provided to the computing device to align the remaining battery life with a target battery life. For example, as shown in FIGS. 1 and 4, ODBLAPM 126/132/400 dynamically controls one or more PL limits (e.g., PL1, PL2) for power provided to computing device 102, e.g., as shown by example in FIGS. 5, 6, and 7B.

In step 806, performance of the computing device is increased on demand by temporarily increasing the dynamically adapted at least one PL limit in response to a usage scenario for the computing device in response to the estimated remaining battery life being within a margin of the target battery life. For example, as shown in FIGS. 1 and 4, ODBLAPM 126/132/400 (e.g., via ODBLAPM model 128/134/404) temporarily increases adaptive PL1 and/or PL2 in response to a scenario 402 indicated by target battery life, device skin temperature, OS events, application events, application information, etc., when the estimated remaining battery life is within a margin of the target battery life. For example, as shown in FIG. 3, trained ML model 404 may be trained to provide on-demand performance boosts for one or more scenarios when the estimated remaining battery life is within 90% of the target battery life. Examples of on-demand performance boosts are shown in FIGS. 6 and 7B during periods of adaptively controlled discharge shown in FIG. 5.

III. Example Computing Device Embodiments

On-demand battery life and adaptive performance manager (ODBLAPM) 126/132/400, ODBLAPM model 128/134/404, model trainer 150/152/210/300, arbiter 406, model training flowchart 300, and trained model flowchart 800 are each implemented as computer program code/instructions configured to be executed in one or more processors and stored in a computer readable storage medium. Alternatively, on-demand battery life and adaptive performance manager (ODBLAPM) 126/132/400, ODBLAPM model 128/134/404, model trainer 150/152/210/300, arbiter 406, model training flowchart 300, and trained model flowchart 800 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 9. FIG. 9 shows a block diagram of an exemplary computing environment 900 that includes a computing device 902. Computing device 902 is an example of each of computing device 102A-102N and server(s) 130, which may each include one or more of the components of computing device 902. In some embodiments, computing device 902 is communicatively coupled with devices (not shown in FIG. 9) external to computing environment 900 via network 904. Network 904 comprises one or more networks such as local area networks (LANs), wide area networks (WANs), enterprise networks, the Internet, etc. In examples, network 904 includes one or more wired and/or wireless portions. In some examples, network 904 additionally or alternatively includes a cellular network for cellular communications. Computing device 902 is described in detail as follows.

Computing device 902 is any of a variety of types of computing devices. Examples of computing device 902 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 902 is a stationary computing device such as a desktop computer, a personal computer (PC), a stationary server device, a minicomputer, a mainframe, a supercomputer, etc.

As shown in FIG. 9, computing device 902 includes a variety of hardware and software components, including a processor 910, a storage 920, a graphics processing unit (GPU) 942, a neural processing unit (NPU) 944, one or more input devices 930, one or more output devices 950, one or more wireless modems 960, one or more wired interfaces 980, a power supply 982, a location information (LI) receiver 984, and an accelerometer 986. Storage 920 includes memory 956, which includes non-removable memory 922 and removable memory 924, and a storage device 988. Storage 920 also stores an operating system 912, application programs 914, and application data 916. Wireless modem(s) 960 include a Wi-Fi modem 962, a Bluetooth modem 964, and a cellular modem 966. Output device(s) 950 includes a speaker 952 and a display 954. Input device(s) 930 includes a touch screen 932, a microphone 934, a camera 936, a physical keyboard 938, and a trackball 940. Not all components of computing device 902 shown in FIG. 9 are present in all embodiments, additional components not shown may be present, and in a particular embodiment any combination of the components are present. In examples, components of computing device 902 are mounted to a circuit card (e.g., a motherboard) of computing device 902, integrated in a housing of computing device 902, or otherwise included in computing device 902. The components of computing device 902 are described as follows.

In embodiments, a single processor 910 (e.g., central processing unit (CPU), microcontroller, a microprocessor, signal processor, ASIC (application specific integrated circuit), and/or other physical hardware processor circuit) or multiple processors 910 are present in computing device 902 for performing such tasks as program execution, signal coding, data processing, input/output processing, power control, and/or other functions. In examples, processor 910 is a single-core or multi-core processor, and each processor core is single-threaded or multithreaded (to provide multiple threads of execution concurrently). Processor 910 is configured to execute program code stored in a computer readable medium, such as program code of operating system 912 and application programs 914 stored in storage 920. The program code is structured to cause processor 910 to perform operations, including the processes/methods disclosed herein. Operating system 912 controls the allocation and usage of the components of computing device 902 and provides support for one or more application programs 914 (also referred to as "applications" or "apps"). In examples, application programs 914 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 910 includes one or more general processors (e.g., CPUs) configured with or coupled to one or more hardware accelerators, such as one or more NPUs 944 and/or one or more GPUs 942.

Any component in computing device 902 can communicate with any other component according to function, although not all connections are shown for ease of illustration. For instance, as shown in FIG. 9, bus 906 is a multiple signal line communication medium (e.g., conductive traces in silicon, metal traces along a motherboard, wires, etc.) present to communicatively couple processor 910 to various other components of computing device 902, although in other embodiments, an alternative bus, further buses, and/or one or more individual signal lines is/are present to communicatively couple components. Bus 906 represents one or more of any of several types of bus structures, including a memory bus or memory controller, a peripheral bus, an accelerated graphics port, and a processor or local bus using any of a variety of bus architectures.

Storage 920 is physical storage that includes one or both of memory 956 and storage device 988, which store operating system 912, application programs 914, and application data 916 according to any distribution. Non-removable memory 922 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 922 includes main memory and is separate from or fabricated in a same integrated circuit as processor 910. As shown in FIG. 9, non-removable memory 922 stores firmware 918 that is present to provide low-level control of hardware. Examples of firmware 918 include BIOS (Basic Input/Output System, such as on personal computers) and boot firmware (e.g., on smart phones). In examples, removable memory 924 is inserted into a receptacle of or is otherwise coupled to computing device 902 and can be removed by a user from computing device 902. Removable memory 924 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 988 are present that are internal and/or external to a housing of computing device 902 and are or are not removable. Examples of storage device 988 include a hard disk drive, a SSD, a thumb drive (e.g., a USB (Universal Serial Bus) flash drive), or other physical storage device.

One or more programs are stored in storage 920. Such programs include operating system 912, one or more application programs 914, and other program modules and program data. Examples of such application programs include computer program logic (e.g., computer program code/instructions) for implementing on-demand battery life and adaptive performance manager (ODBLAPM) 126/132/400, ODBLAPM model 128/134/404, model trainer 150/152/210/300, arbiter 406, model training flowchart 300, and trained model flowchart 800 (and/or any individual operations/steps thereof).

Storage 920 also stores data used and/or generated by operating system 912 and application programs 914 as application data 916. Examples of application data 916 include web pages, text, images, tables, sound files, video data, and other data. In examples, application data 916 is sent to and/or received from one or more network servers or other devices via one or more wired or wireless networks. Storage 920 is used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 902 through one or more input devices 930 and receives information from computing device 902 through one or more output devices 950. Input device(s) 930 includes one or more of touch screen 932, microphone 934, camera 936, physical keyboard 938, and/or trackball 940 and output device(s) 950 includes one or more of speaker 952 and display 954. Each of input device(s) 930 and output device(s) 950 are integral to computing device 902 (e.g., built into a housing of computing device 902) or are external to computing device 902 (e.g., communicatively coupled wired or wirelessly to computing device 902 via wired interface(s) 980 and/or wireless modem(s) 960. Further input devices 930 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 954 displays information, as well as operating as touch screen 932 by receiving user commands and/or other information (e.g., by touch, finger gestures, virtual keyboard, etc.) as a user interface. Any number of each type of input device(s) 930 and output device(s) 950 are present, including multiple microphones 934, multiple cameras 936, multiple speakers 952, and/or multiple displays 954.

In embodiments where GPU 942 is present, GPU 942 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 942 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 944 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 928. In an example, NPU 944 is configured for a data-driven parallel computing and is highly efficient at processing massive multimedia data such as videos and images and processing data for neural networks. NPU 944 is configured for efficient handling of AI-related tasks, such as speech recognition, background blurring in video calls, photo or video editing processes like object detection, etc.

In embodiments disclosed herein that implement ML models, NPU 944 can be utilized to execute such ML models, of which MLM 928 is an example. For instance, where applicable, MLM 928 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 944 is used to train MLM 928. To train MLM 928, training data is that includes input features (attributes) and their corresponding output labels/target values (e.g., for supervised learning) is collected. A training algorithm is a computational procedure that is used so that MLM 928 learns from the training data. Examples of training inputs for ML model training include user position, angle, gesture, time of day, location, user crypto, etc. Parameters/weights are internal settings of MLM 928 that are adjusted during training by the training algorithm to reduce a difference between predictions by MLM 928 and actual outcomes (e.g., output labels). In some examples, MLM 928 is set with initial values for the parameters/weights. A loss function measures a dissimilarity between predictions by MLM 928 and the target values, and the parameters/weights of MLM 928 are adjusted to minimize the loss function. The parameters/weights are iteratively adjusted by an optimization technique, such as gradient descent. In this manner, MLM 928 is generated through training by NPU 944 to be used to generate inferences based on received input feature sets for particular applications. MLM 928 is generated as a computer program or other type of algorithm configured to generate an output (e.g., a classification, a prediction/inference) based on received input features and is stored in the form of a file or other data structure.

In examples, such training of MLM 928 by NPU 944 is supervised or unsupervised. According to supervised learning, input objects (e.g., a vector of predictor variables) and a desired output value (e.g., a human-labeled supervisory signal) train MLM 928. The training data is processed, building a function that maps new data on expected output values. Example algorithms usable by NPU 944 to perform supervised training of MLM 928 in particular implementations include support-vector machines, linear regression, logistic regression, Naïve Bayes, linear discriminant analysis, decision trees, K-nearest neighbor algorithm, neural networks, and similarity learning.

In an example of supervised learning where MLM 928 is an LLM, MLM 928 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 928 is trained to learn patterns from unlabeled data. For instance, in embodiments where MLM 928 implements unsupervised learning techniques, MLM 928 identifies one or more classifications or clusters to which an input belongs. During a training phase of MLM 928 according to unsupervised learning, MLM 928 tries to mimic the provided training data and uses the error in its mimicked output to correct itself (i.e., correct weights and biases). In further examples, NPU 944 perform unsupervised training of MLM 928 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 944 need not necessarily be present in all ML model embodiments. In embodiments where ML models are present, any one or more of processor 910, GPU 942, and/or NPU 944 can be present to train and/or execute MLM 928.

One or more wireless modems 960 can be coupled to antenna(s) (not shown) of computing device 902 and can support two-way communications between processor 910 and devices external to computing device 902 through network 904, as would be understood to persons skilled in the relevant art(s). Wireless modem 960 is shown generically and can include a cellular modem 966 for communicating with one or more cellular networks, such as a GSM network for data and voice communications within a single cellular network, between cellular networks, or between the mobile device and a public switched telephone network (PSTN). In examples, wireless modem 960 also or alternatively includes other radio-based modem types, such as a Bluetooth modem 964 (also referred to as a "Bluetooth device") and/or Wi-Fi modem 962 (also referred to as an "wireless adaptor"). Wi-Fi modem 962 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 964 is configured to communicate with another Bluetooth-capable device according to the Bluetooth short-range wireless technology standard(s) such as IEEE 802.15.1 and/or managed by the Bluetooth Special Interest Group (SIG).

Computing device 902 can further include power supply 982, LI receiver 984, accelerometer 986, and/or one or more wired interfaces 980. Example wired interfaces 980 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 980 of computing device 902 provide for wired connections between computing device 902 and network 904, or between computing device 902 and one or more devices/peripherals when such devices/peripherals are external to computing device 902 (e.g., a pointing device, display 954, speaker 952, camera 936, physical keyboard 938, etc.). Power supply 982 is configured to supply power to each of the components of computing device 902 and receives power from a battery internal to computing device 902, and/or from a power cord plugged into a power port of computing device 902 (e.g., a USB port, an A/C power port). LI receiver 984 is useable for location determination of computing device 902 and in examples includes a satellite navigation receiver such as a Global Positioning System (GPS) receiver and/or includes other type of location determiner configured to determine location of computing device 902 based on received information (e.g., using cell tower triangulation, etc.). Accelerometer 986, when present, is configured to determine an orientation of computing device 902.

Note that the illustrated components of computing device 902 are not required or all-inclusive, and fewer or greater numbers of components can be present as would be recognized by one skilled in the art. In examples, computing device 902 includes one or more of a gyroscope, barometer, proximity sensor, ambient light sensor, digital compass, etc. In an example, processor 910 and memory 956 are co-located in a same semiconductor device package, such as being included together in an integrated circuit chip, FPGA, or system-on-chip (SOC), optionally along with further components of computing device 902.

In embodiments, computing device 902 is configured to implement any of the above-described features of flowcharts herein. Computer program logic for performing any of the operations, steps, and/or functions described herein is stored in storage 920 and executed by processor 910.

In some embodiments, server infrastructure 970 is present in computing environment 900 and is communicatively coupled with computing device 902 via network 904. Server infrastructure 970, when present, is a network-accessible server set (e.g., a cloud-based environment or platform). As shown in FIG. 9, server infrastructure 970 includes clusters 972. Each of clusters 972 comprises a group of one or more compute nodes and/or a group of one or more storage nodes. For example, as shown in FIG. 9, cluster 972 includes nodes 974. Each of nodes 974 are accessible via network 904 (e.g., in a "cloud-based" embodiment) to build, deploy, and manage applications and services. In examples, any of nodes 974 is a storage node that comprises a plurality of physical storage disks, SSDs, and/or other physical storage devices that are accessible via network 904 and are configured to store data associated with the applications and services managed by nodes 974.

Each of nodes 974, as a compute node, comprises one or more server computers, server systems, and/or computing devices. For instance, a node 974 in accordance with an embodiment includes one or more of the components of computing device 902 disclosed herein. Each of nodes 974 is configured to execute one or more software applications (or "applications") and/or services and/or manage hardware resources (e.g., processors, memory, etc.), which are utilized by users (e.g., customers) of the network-accessible server set. In examples, as shown in FIG. 9, nodes 974 includes a node 946 that includes storage 948 and/or one or more of a processor 958 (e.g., similar to processor 910, GPU 942, and/or NPU 944 of computing device 902). Storage 948 stores application programs 976 and application data 978. Processor(s) 958 operates application programs 976 which access and/or generate related application data 978. In an implementation, nodes such as node 946 of nodes 974 operate or comprise one or more virtual machines, with each virtual machine emulating a system architecture (e.g., an operating system), in an isolated manner, upon which applications such as application programs 976 are executed.

In embodiments, one or more of clusters 972 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 972 are included in a datacenter in a distributed collection of datacenters. In embodiments, exemplary computing environment 900 comprises part of a cloud-based platform.

In an embodiment, computing device 902 accesses application programs 976 for execution in any manner, such as by a client application and/or a browser at computing device 902.

In an example, for purposes of network (e.g., cloud) backup and data security, computing device 902 additionally and/or alternatively synchronizes copies of application programs 914 and/or application data 916 to be stored at network-based server infrastructure 970 as application programs 976 and/or application data 978. In examples, operating system 912 and/or application programs 914 include a file hosting service client configured to synchronize applications and/or data stored in storage 920 at network-based server infrastructure 970.

In some embodiments, on-premises servers 992 are present in computing environment 900 and are communicatively coupled with computing device 902 via network 904. On-premises servers 992, when present, are hosted within an organization's infrastructure and, in many cases, physically onsite of a facility of that organization. On-premises servers 992 are controlled, administered, and maintained by IT (Information Technology) personnel of the organization or an IT partner to the organization. Application data 998 can be shared by on-premises servers 992 between computing devices of the organization, including computing device 902 (when part of an organization) through a local network of the organization, and/or through further networks accessible to the organization (including the Internet). Furthermore, in examples, on-premises servers 992 serve applications such as application programs 996 to the computing devices of the organization, including computing device 902. Accordingly, in examples, on-premises servers 992 include storage 994 (which includes one or more physical storage devices such as storage disks and/or SSDs) for storage of application programs 996 and application data 998 and include a processor 990 (e.g., similar to processor 910, GPU 942, and/or NPU 944 of computing device 902) for execution of application programs 996. In some embodiments, multiple processors 990 are present for execution of application programs 996 and/or for other purposes. In further examples, computing device 902 is configured to synchronize copies of application programs 914 and/or application data 916 for backup storage at on-premises servers 992 as application programs 996 and/or application data 998.

Embodiments described herein may be implemented in one or more of computing device 902, network-based server infrastructure 970, and on-premises servers 992. For example, in some embodiments, computing device 902 is used to implement systems, clients, or devices, or components/subcomponents thereof, disclosed elsewhere herein. In other embodiments, a combination of computing device 902, network-based server infrastructure 970, and/or on-premises servers 992 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 920. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules, or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 914) are stored in storage 920. Such computer programs can also be received via wired interface(s) 960 and/or wireless modem(s) 960 over network 904. Such computer programs, when executed or loaded by an application, enable computing device 902 to implement features of embodiments discussed herein. Accordingly, such computer programs represent controllers of the computing device 902.

Embodiments are also directed to computer program products comprising computer code or instructions stored on any computer-readable medium or computer-readable storage medium. Such computer program products include the physical storage of storage 920 as well as further physical storage types.

IV. Additional Example Embodiments

Systems, methods, and computer program products are described herein related to on-demand battery life with adaptive performance control, which achieves a target battery life (e.g., based on user request) by dynamically regulating a battery discharge slope. A power mode is implemented with adaptive power level (PL) limits (e.g., average PL limit and maximum PL limit) to manage battery life over time intervals. The discharge rate of the battery is controlled by dynamically adapting PL limits of the power provided to the computing device to align the remaining battery life with a target battery life. PL limits can be adapted based on a hardcoded mapping of a target performance levels or based on a machine learning model. Computing device performance is adaptively enhanced on demand for usage scenarios by temporary adjustment of PL limits when estimated battery life is within a margin of target battery life.

Embodiments described herein enable on-demand battery life with adaptive performance control. An on-demand battery life and adaptive performance manager (ODBLAPM) achieves a target battery life by dynamically regulating a battery discharge slope. An ODBLAPM implements a power mode with adaptive power level (PL) limits to manage a relative state of charge (RSOC) of a battery over time. The ODBLAPM may include an ML model trained to adapt one or more PL limits to align the remaining battery life with a target battery life. Computing device performance is enhanced on demand for usage scenarios by temporary adjustment of PL limits when estimated battery life is within a margin of target battery life. Target performance (e.g., minimum performance level) may be determined by user input or may be learned from user experience. PL limits can be adapted based on, for example, a hardcoded mapping of a target performance levels or based on a machine learning model. As a result of adaptive power and performance management utilizing adaptive PL limits, power consumption can be reduced on millions to billions of devices while improving user experience with adaptive on-demand battery life and adaptive on-demand performance.

In some examples, a computing device comprises a battery configured to provide power to components of the computing device and an ODBLAPM configured to estimate a remaining battery life of the battery based on a discharge rate of the battery. The ODBLAPM dynamically controls the discharge rate of the battery by dynamically adapting at least one PL limit of the power provided to the computing device to align the remaining battery life with a target battery life. The ODBLAPM increases performance on demand by temporarily increasing the dynamically adapted at least one PL limit in response to a usage scenario for the computing device in response to the estimated remaining battery life being within a margin of the target battery life.

In some examples, the at least one PL limit comprises at least one of an average PL limit or a maximum PL limit.

In some examples, the on-demand battery life and adaptive performance manager comprises a machine-learning (ML) model that determines the dynamic adaptation of the at least one PL limit and the temporary increase in the dynamically adapted at least one PL limit.

In some examples, a trainer trains the ML model based on performance feedback provided by the computing device in response to implementation of a plurality of usage scenarios under a plurality of settings of the at least one PL limit.

In some examples, the trainer also trains a plurality of ML models for a plurality of computing devices with different builds based on performance feedback provided by each of the plurality of computing devices in response to implementation of a plurality of usage scenarios under a plurality of settings of the at least one PL limit.

In some examples, the ML model determines a time period for temporarily increasing the dynamically adapted at least one PL limit.

In some examples, the usage scenario is indicated by one or more of operating system events, application events, application information, temperature, the remaining battery life, or the target battery life of the computing device.

In some examples, the on-demand battery life and adaptive performance manager comprises an arbiter configured to determine an adjustment to the dynamic adaptation of the at least one PL limit based on a user indication to adjust performance.

In some examples, the target battery life is based on a user request for battery life.

In some examples, a method comprises estimating a remaining battery life of a battery providing power to a computing device based on a discharge rate of the battery; dynamically controlling the discharge rate of the battery by dynamically adapting at least one power level (PL) limit of the power provided to the computing device to align the remaining battery life with a target battery life; and increasing performance of the computing device on demand by temporarily increasing the dynamically adapted at least one PL limit in response to a usage scenario for the computing device in response to the estimated remaining battery life being within a margin of the target battery life.

In some examples, the at least one PL limit comprises at least one of an average PL limit or a maximum PL limit.

In some examples, a machine-learning (ML) model determines the dynamic adaptation of the at least one PL limit and the temporary increase in the dynamically adapted at least one PL limit.

In some examples, the method further comprises training the ML model based on performance feedback provided by the computing device in response to implementation of a plurality of usage scenarios under a plurality of settings of the at least one PL limit.

In some examples, the method further comprises receiving an indication of the usage scenario based on one or more of operating system events, application events, application information, temperature, the remaining battery life, or the target battery life of the computing device.

In some examples, the method further comprises determining an adjustment to the dynamic adaptation of the at least one PL limit based on a user indication to adjust performance of the computing device.

In some examples, the method further comprises receiving a request for battery life; and determining the target battery life based on the request for battery life.

In some examples, the method further comprises controlling power provided to at least one component of the computing device based on the dynamic adaptation of the at least one PL limit and the temporary increase in the dynamically adapted at least one PL limit.

A computer-readable storage medium is described herein. The computer-readable storage medium has computer program logic recorded thereon that, executed by a processor circuit, causes the processor circuit to perform a method. The method may comprise, for example, any combination of operations described herein.

For example, the method may comprise estimating a remaining battery life of a battery providing power to a computing device based on a discharge rate of the battery; dynamically controlling the discharge rate of the battery by dynamically adapting at least one power level (PL) limit of the power provided to the computing device to align the remaining battery life with a target battery life; and increasing performance of the computing device on demand by temporarily increasing the dynamically adapted at least one PL limit in response to a usage scenario for the computing device in response to the estimated remaining battery life being within a margin of the target battery life.

In some examples, a machine-learning (ML) model determines the dynamic adaptation of the at least one PL limit and the temporary increase in the dynamically adapted at least one PL limit.

In some examples, the method further comprises training the ML model based on performance feedback provided by the computing device in response to implementation of a plurality of usage scenarios under a plurality of settings of the at least one PL limit.

V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Moreover, according to the described embodiments and techniques, any components of systems, computing devices, servers, device management services, virtual machine provisioners, applications, and/or data stores and their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (e.g., or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (e.g., computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.

**Claims**

1. A computing device (102) comprising:

   a battery (142) configured to provide power to components of the computing device (102);
   an on-demand battery life and adaptive performance manager (126) configured to:

   estimate (802) a remaining battery life of the battery (142) based on a discharge rate of the battery (142);
   dynamically control (804) the discharge rate of the battery (142) by dynamically adapting at least one power level (PL) limit of the power provided to the computing device (102) to align the remaining battery life with a target battery life; and
   increase (806) performance of the computing device (102) on demand by temporarily increasing the dynamically adapted at least one PL limit in response to a usage scenario for the computing device (102) in response to the estimated remaining battery life being within a margin of the target battery life.

2. The computing device of claim 1, wherein the at least one PL limit comprises at least one of an average PL limit or a maximum PL limit.

3. The computing device of claims 1 or 2, wherein the on-demand battery life and adaptive performance manager comprises a machine-learning (ML) model that determines the dynamic adaptation of the at least one PL limit and the temporary increase in the dynamically adapted at least one PL limit.

4. The computing device of claim 3, wherein a trainer trains the ML model based on performance feedback provided by the computing device in response to implementation of a plurality of usage scenarios under a plurality of settings of the at least one PL limit, or the trainer trains a plurality of ML models for a plurality of computing devices with different builds based on performance feedback provided by each of the plurality of computing devices in response to implementation of a plurality of usage scenarios under a plurality of settings of the at least one PL limit.

5. The computing device of any preceding claim, wherein the ML model determines a time period for temporarily increasing the dynamically adapted at least one PL limit.

6. The computing device of claim any preceding claim, wherein:

the usage scenario is indicated by one or more of operating system events, application events, application information, temperature, the remaining battery life, or the target battery life of the computing device; or
the on-demand battery life and adaptive performance manager comprises an arbiter configured to determine an adjustment to the dynamic adaptation of the at least one PL limit based on a user indication to adjust performance; or
the target battery life is based on a user request for battery life.

7. A method (800), comprising:

estimating (802) a remaining battery life of a battery providing power to a computing device based on a discharge rate of the battery;
dynamically (804) controlling the discharge rate of the battery by dynamically adapting at least one power level (PL) limit of the power provided to the computing device to align the remaining battery life with a target battery life; and
increasing (806) performance of the computing device on demand by temporarily increasing the dynamically adapted at least one PL limit in response to a usage scenario for the computing device in response to the estimated remaining battery life being within a margin of the target battery life.

8. The method of claim 7, wherein the at least one PL limit comprises at least one of an average PL limit or a maximum PL limit.

9. The method of claims 7 or 8, wherein a machine-learning (ML) model determines the dynamic adaptation of the at least one PL limit and the temporary increase in the dynamically adapted at least one PL limit.

10. The method of claim 9, further comprising:
training the ML model based on performance feedback provided by the computing device in response to implementation of a plurality of usage scenarios under a plurality of settings of the at least one PL limit.

11. The method of any of claims 7 to 10, further comprising:
receiving an indication of the usage scenario based on one or more of operating system events, application events, application information, temperature, the remaining battery life, or the target battery life of the computing device.

12. The method of any of claims 7 to 11, further comprising:
determining an adjustment to the dynamic adaptation of the at least one PL limit based on a user indication to adjust performance of the computing device.

13. The method of any of claims 7 to 12, further comprising:

receiving a request for battery life; and
determining the target battery life based on the request for battery life.

14. The method of any of claims 7 to 13, further comprising:
controlling power provided to at least one component of the computing device based on the dynamic adaptation of the at least one PL limit and the temporary increase in the dynamically adapted at least one PL limit.

15. A computer-readable storage medium (920, 948, 994) having program instructions (914, 976, 996) recorded thereon that, executed by a processing circuit (910, 958, 990), perform a method (800) in accordance with any of claims 7 to 14.

**FIG. 1**

200

Deployed
Models 206

Network(s)
136

Server(s) 130

Model Trainer(s)
210

Training Scenarios 202

Scenarios A
202A

Scenarios B
202B

Scenarios N
202N

Computing Device A 102A

PL1/PL2 Sweeps 204A

Computing Device B 102B

PL1/PL2 Sweeps 204B

Computing Device N 102N

PL1/PL2 Sweeps 204N

Performance Feedback
208

**FIG. 2**

**FIG. 3**

EP 4 787 118 A1

**FIG. 4**

**FIG. 5**

EP 4 787 118 A1

600

Model Training Based on PL1/PL2 Sweep Process for Scenarios

Trained Model PL1/PL2 Response for Scenarios

Power (W)

Boost Level PL2_Adaptive

Increase PL2_Adaptive On Demand For Performance Boost

Performance Benefit Time

Performance Benefit Time

T_PERF_FEEDBACK

Maintain PL2_Adaptive

Maintain PL2_Ada

Default Level PL2_Adaptive

Tau

SoC TDP

PL1_LIMIT

PL1 margin

Time (Seconds)

0    T1    T2    T3    T4    T5    T6    T7    T8

**FIG. 6**

29

700A

PL2=60W

PL2

PL1=30W

PL1

Time (Seconds)

**FIG. 7A**

700B

PL2=50W

PL2=45W

PL2=35W

PL2=30W

PL2=30W

PL2=30W

PL2

PL1=20W

PL1=25W

PL1=15W

PL1

PL1=15W

Web Browsing
Loading/Tab Add

Productivity App
Loading

Conferencing App
Loading

OS Event

Time (Seconds)

**FIG. 7B**

EP 4 787 118 A1

800

| Estimate a remaining battery life of a battery providing power to a computing device based on a discharge rate of the battery | 802 |

| Dynamically control the discharge rate of the battery by dynamically adapting at least one power level (PL) limit of the power provided to the computing device to align the remaining battery life with a target battery life | 804 |

| Increase performance of the computing device on demand by temporarily increasing the dynamically adapted at least one PL limit in response to a usage scenario for the computing device in response to the estimated remaining battery life being within a margin of the target battery life | 806 |

**FIG. 8**

900

Network-Based Server
Infrastructure 970

Clusters 972

Nodes 974

Node 946

Storage 948

Application
Programs
976

Application
Data 978

Processor 958

904

Network

On-Premises Servers 992

Storage 994

Application
Programs 996

Application Data 998

Processor 990

Computing Device 902

Input Device(s) 930

Camera 936

Touch Screen
932

Physical
Keyboard 938

Microphone 934

Trackball 940

Power
Supply
982

Accelerometer
986

LI
Receiver
984

NPU 944

MLM 928

GPU 942

Processor
910

Wired
Interface(s)
980

Output Device(s) 950

Speaker
952

Display
954

Wireless Modem(s) 960

Wi-Fi
962

Bluetooth
964

Cellular
966

Storage 920

Memory 956

Non-Removable
Memory
922

Firmware 918

Removable
Memory
924

Operating
System 912

Application
Programs 914

Application Data
916

Storage Device
988

906

**FIG. 9**

Europäisches
Patentamt
European
Patent Office
Office européen
des brevets

# EUROPEAN SEARCH REPORT

**Application Number**

EP 25 22 6595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 109 219 A1 (INTEL CORP [US]) 28 December 2022 (2022-12-28) * paragraphs [0012] - [0036] * * paragraph [0045] * * paragraphs [0082] - [0085] * * paragraph [0099] * * paragraph [0128] * * figures 1-6 * | 1-15 | INV. G06F1/26 G06F1/3212 G06F1/3234 |
| A | US 2021/123982 A1 (PANTAZIS OMIROS [GB]) 29 April 2021 (2021-04-29) * paragraphs [0033] - [0056]; figures 1-3 * | 1-15 | |
| A | US 2021/018972 A1 (XU YUQIONG [CN] ET AL) 21 January 2021 (2021-01-21) * paragraphs [0053] - [0084] * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 10 June 2026 | de Biolley, Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 6595

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2026

| Patent document cited in search report | | | Publication date | Patent family member(s) | | Publication date |
|---|---|---|---|---|---|---|
| EP 4109219 | A1 | | 28-12-2022 | EP | 4109219 A1 | 28-12-2022 |
| | | | | US | 2022407337 A1 | 22-12-2022 |
| US 2021123982 | A1 | | 29-04-2021 | GB | 2588701 A | 05-05-2021 |
| | | | | US | 2021123982 A1 | 29-04-2021 |
| | | | | WO | 2021086041 A1 | 06-05-2021 |
| US 2021018972 | A1 | | 21-01-2021 | CN | 110941320 A | 31-03-2020 |
| | | | | EP | 3842896 A1 | 30-06-2021 |
| | | | | US | 2021018972 A1 | 21-01-2021 |
| | | | | WO | 2020063290 A1 | 02-04-2020 |

EPO FORM P0459

For more details about this annex : see Official Journal of the European Patent Office, No. 12/82